# EUROPÄISCHE PATENTSCHRIFT

(11) **EP 2 741 986 B1**
(45) Veröffentlichungstag und Bekanntmachung des Hinweises auf die Patenterteilung: **18.10.2017**
(21) Anmeldenummer: 12737518.6
(22) Anmeldetag: 12.07.2012
(51) Int. Cl.: B65G 47/08

(54) **VERFAHREN UND VORRICHTUNG ZUR BILDUNG VON LAGEN AUS ARTIKELN, STÜCKGÜTERN ODER GEBINDEN**
METHOD AND APPARATUS FOR FORMING LAYERS OF ARTICLES OR MULTIPACKS
PROCÉDÉ ET DISPOSITIF DE FORMATION DE PALIERS FAITS D'ARTICLES, D'OBJETS ISOLÉS OU DE CONTENANTS

(30) Priorität: 11.08.2011 DE 102011080812
(43) Veröffentlichungstag der Anmeldung: 18.06.2014
(73) Patentinhaber: KRONES Aktiengesellschaft, 93073 Neutraubling (DE)
(72) Erfinder: ESCHLBECK, Richard, 93073 Neutraubling (DE)
(74) Vertreter: Benninger, Johannes
(86) Internationale Anmeldenummer: PCT/EP2012/063683
(87) Internationale Veröffentlichungsnummer: WO 2013/020770

(56) Entgegenhaltungen:
- EP-A1- 2 279 971
- EP-A2- 1 767 474
- WO-A1-2010/089783
- WO-A1-2010/106529
- DE-A1- 19 713 619
- DE-A1-102007 047 405

## Beschreibung

Die vorliegende Erfindung betrifft ein Verfahren zur Lagenbildung und/oder zur Palettierung von Paketen, Stückgütern, Gebinden oder Artikeln mit den Merkmalen des unabhängigen Verfahrensanspruch 1. Die Erfindung betrifft weiterhin eine Vorrichtung zur Bildung von flächigen Lagen aus nebeneinander stehenden Artikeln, Stückgütern oder Gebinden mit den Merkmalen des unabhängigen Anspruchs 5. Bei bekannten Verpackungs- und Palettieranlagen werden Pakete und Stückgüter auf Transportspuren befördert und in geeigneter Weise verschoben oder ausgerichtet, um gewünschte Lagenbilder zu erzeugen, die anschließend zu Paletten gestapelt werden können.

Aus der EP 1 046 598 A1 ist eine Vorrichtung zur Handhabung von Behälterpaketen wie Flaschen oder Blechdosen bekannt, mit der diese für einen Transport auf Paletten in einer vorbestimmten Konfiguration angeordnet werden sollen. Die Vorrichtung umfasst eine Station zum Ausrichtung und Trennen der Pakete mit einer Vielzahl von parallelen Diagonalführungen auf, die jeweils mit verfahrbaren Greifelementen ausgestattet sind. Jedes der Greifelemente nimmt ein Paket auf und richtet es entsprechend einer gewünschten Anordnung oder Konfiguration der übrigen Pakete aus. Den Stationen werden die Pakete mittels eines Förderbandes in einer Reihe oder in mehreren Reihen zugeführt. Die Verfahrgeschwindigkeiten der Greifelemente an den Diagonalführungen werden von einem Prozessor gesteuert. Die Geschwindigkeiten sind je nach Vorschubgeschwindigkeit des Transportbandes veränderbar, um die Greifelemente in die Lage zu versetzen, den verschiedenen Paketen zu folgen und diese derart zu handhaben, dass sie eine genaue Winkelstellung zur Bewegungsrichtung des Bandes einnehmen. Für jede einzelne Paketreihe auf dem Förderband wird jeweils mindestens ein Greifelement benötigt. Die Greifelemente werden ausschließlich diagonal bewegt und sind daher in ihrem Bewegungsradius eingeschränkt.

Die DE 603 13 039 T2 offenbart weiterhin eine Vorrichtung und ein Verfahren zum Anordnen und Ausrichten von Paketen. Das Verfahren soll dazu dienen, Pakete, die von nebeneinander angeordneten Förderbändern zugeführt werden, in Gleichschritt zu bringen. Hierzu wird zunächst ein voreilendes Paket erfasst und die Drehzahl eines Antriebsmotors eines ersten Bandes, auf dem sich das voreilende Paket befindet, gemessen. In Abhängigkeit von der gemessenen Drehzahl des Motors des ersten Bandes wird ein Zähler heraufgesetzt und in Abhängigkeit des Zählerwertes die Bandgeschwindigkeit des ersten Förderbandes reduziert. Zudem wird das nacheilende Paket erfasst und die Drehzahl eines Antriebsmotors eines zweiten Förderbandes, auf dem sich das nacheilende Paket befindet, gemessen. In Abhängigkeit von der gemessenen Drehzahl des Motors des zweiten Bandes wird der Zähler herabgesetzt und in Abhängigkeit des Zählerwertes die Bandgeschwindigkeit des zweiten Förderbandes erhöht. Mit diesem Verfahren soll den in der Praxis auftretenden unterschiedlichsten Palettieranforderungen genügt werden können.

Die DE 102 19 129 A1 offenbart zudem ein Verfahren und eine Vorrichtung zum Drehen und Verteilen oder Zusammenführen von sog. Packs, die in mindestens einer Zuteilbahn zugeführt und in mindestens einer zu der Zuteilbahn oder den Zuteilbahnen parallelen Auslaufbahn in einer um 90° gedrehten Anordnung abgeführt werden. Bei dem Verfahren werden jeweils mindestens zwei Packs erfasst und als Gruppe um jeweils 90° verdreht. WO 2010/106529 A1 beschreibt ein Verfahren nach dem Oberbegriff des Anspruchs 1. Aus dem bekannten Stand der Technik lässt sich somit zwischen Gruppiertischen mit einer einbahnigen Zuführung und Gruppiertischen mit zwei- oder mehrbahnigen Zuführungen unterscheiden. Um eine stapelbare Artikellage bilden zu können, ist grundsätzlich eine vordefinierte Anzahl an Artikeln notwendig. Um die Gruppierleistung und die damit in direktem Zusammenhang stehende Palettierleistung erhöhen zu können, ist zusätzlich zu dem einen Zuführband der Gruppierstation ein weiteres, hierzu parallel angeordnetes Zuführband vorhanden. Die Gruppierstation bzw. dessen Steuerung wird dabei so programmiert, dass abwechselnd von dem ersten und mindestens einem weiteren Zuführband Artikel verschoben und/oder verdreht und an eine vorbestimmte Position versetzt werden.

Es ist auch denkbar, mehrere solcher Gruppiertische hintereinander anzuordnen, wobei dem ersten Gruppiertisch bspw. zwei Zuführbänder zugeordnet sind. Somit kann die Leistung nochmals dadurch erhöht werden, dass bspw. ein Artikel von dem ersten Zuführband durch den ersten Gruppiertisch bzw. dessen Manipulator positioniert wird und ein weiterer Artikel des zweiten Zuführbandes im freien Durchlauf den ersten Gruppiertisch passiert und von dem zweiten Gruppiertisch bzw. dessen Manipulator positioniert wird.

Bei bekannten Palettieranlagen und Verfahren zum Palettieren werden mindestens einem Gruppiertisch mit mindestens einem Manipulator mittels einer, zwei oder mehr paralleler Transportspuren ununterbrochene, lückenlose oder durch Lücken unterbrochene Reihen von Paketen, Stückgütern oder Gebinden zugeführt, die mittels des Manipulators bzw. der Manipulatoren in einer Weise gedreht und verschoben werden, dass sie eine stapel- und/oder palettierbare Lage bilden, welche dann anschließend zu einer Palettiervorrichtung zur Stapelung und/oder zur Lagenbildung überführt werden. So erfolgt bei bekannten Transport- und Palettiervorrichtungen bspw. ein zweibahniger Zuführtransport, bei dem die nachgeordnete Gruppierung und Positionierung der zugeführten Stückgüter oder Pakete bei einer Stauung oder einer teilweisen oder vollständigen Unterbrechung der Zuführung einer der beiden Bahnen zum Erliegen kommt, da die Gruppieranlagen für eine vollständige Abdeckung der Zielfläche für die gruppierten und/oder verschobenen bzw. positionierten Pakete oder Stückgüter der ununterbrochenen oder lückenbehafteten Zuführung von Paketen oder Stückgütern jeweils beider Transportbahnen bedürfen.

Bei bekannten Gruppieranlagen ist somit zu gewährleisten, das jede der mindestens zwei Transportbahnen immer ausreichend mit Gebinden belegt ist, um den Gruppiertisch mit Artikeln zu versorgen und es letztendlich dem Gruppiertisch zu ermöglichen, anhand des vorgegebenen Bewegungsablaufs seiner Manipulatoren mehrere Artikel zu einer Artikellage zusammen zu stellen. Weiterhin ist bekannt, dass bei der Artikelzuführung von mindestens zwei Transportspuren der Gruppiertisch, insbesondere dessen Manipulator einem bestimmten Bewegungsablauf unterliegt. So wird dem Gruppiertisch und dem ihm zugeordneten Manipulator zur Bildung einer Artikellage durch ein Steuerprogramm mitgeteilt, in welcher Abfolge der jeweilige Artikel eines der Zuführbänder als nächstes entsprechend des vorgegebenen Lagenschemas positioniert werden muss. Der Gruppiertisch wird somit in einer Weise nach einem vorbestimmten und nicht variablen Bewegungsablauf gesteuert, dass bspw. als erstes der durch das erste Zuführband zugeführte Artikel positioniert wird, während als nächstes zwei Artikel vom zweiten Zuführband positioniert werden. Dies führt zu Nachteilen hinsichtlich des mit solchen Maschinen oder diesen Verfahren zu erzielenden Durchsatzes an palettierbaren Paketen oder Stückgütern. Bei Störungen oder Unterbrechungen im Zulauf muss das gesamte Gruppierverfahren unterbrochen werden.

Das vorrangige Ziel der vorliegenden Erfindung wird darin gesehen, ein Verfahren und eine Vorrichtung zur Lagenbildung und/oder Palettierung von Paketen, Stückgütern, Gebinden oder Artikeln zur Verfügung zu stellen, mit deren Hilfe auch bei unregelmäßiger Zuführung der Pakete, Stückgüter, Gebinde oder Artikel auf einzelnen von mehreren Transportspuren oder bei teilweisen oder vollständigen Unterbrechungen wenigstens einer der Transportspuren ein möglichst hoher Handhabungsdurchsatz aufrecht erhalten werden kann.

Dieses Ziel der Erfindung wird mit den Gegenständen der unabhängigen Ansprüche erreicht. Merkmale vorteilhafter Weiterbildungen der Erfindung ergeben sich aus den jeweiligen abhängigen Ansprüchen. Zur Erreichung des genannten Ziels schlägt die Erfindung ein Verfahren zur Bildung von palettierfähigen Lagen aus nebeneinander stehenden Artikeln, Stückgütern, Gebinden o. dgl. auf einem Lagenbildungsplatz mit wenigsten einem programmgesteuerten Manipulator zum Abholen und/oder Überführen einzelner oder mehrerer Artikel, Stückgüter oder Gebinde an wenigstens zwei räumlich voneinander entfernten und/oder räumlich versetzten Zuführstationen und zum Positionieren durch Drehen und/oder Verschieben der Artikel, Stückgüter oder Gebinde in vorgebbare Freigabepositionen auf dem Lagenbildungsplatz vor. Bei dem Verfahren ist vorgesehen, dass in Abhängigkeit von einer momentanen Bereitstellungssituation der Artikel, Stückgüter oder Gebinde an den wenigstens zwei Zuführstationen der wenigstens eine Manipulator die Artikel, Stückgüter oder Gebinde selektiv und ohne eine festgelegte Reihenfolge an den Zuführstationen abholt und bei flexibler Anpassung der jeweiligen Transferbahn bzw. des jeweiligen Verschiebeweges in die Freigabeposition überführt. Bei dem Verfahren wird erfindungsgemäß vorgesehen, dass eine Bereitstellungsfrequenz der Artikel, Stückgüter oder Gebinde an den Zuführstationen und/oder eine Sortier- und/oder Transfergeschwindigkeit des wenigstens einen Manipulators variabel sind. Insbesondere kann auf diese Weise eine variable Anpassbarkeit der Manipulatorbewegungen an unterschiedliche Bereitstellungssituationen und/oder Bereitstellungsfrequenzen, die zudem bei mehreren Zuführstationen ggf. stark voneinander abweichen können, ermöglicht werden. Darüber hinaus kann eine Variante des erfindungsgemäßen Verfahrens vorsehen, dass eine Transfer-, Sortier- und/oder Verschiebereihenfolge der durch den wenigstens einen Manipulators verschobenen und/oder gedrehten Artikel, Stückgüter oder Gebinde in Anpassung an voneinander abweichende Mengen der an den Zuführstationen jeweils bereitgestellten Mengen an Artikeln, Stückgütern oder Gebinden aus einer Mehrzahl oder Vielzahl von möglichen Bewegungsmustern ausgewählt wird. Eine solche Manipulatorsteuerung entspricht einer Kennfeldsteuerung, bei der eine Vielzahl von Eingangsparametern die Auswahl der Manipulatorbewegungen in unterschiedlicher Weise - abhängig von den jeweiligen Kennfeldzuordnungen - steuern kann.

Wenn im vorliegenden Zusammenhang von einem Lagenbildungsplatz die Rede ist, so kann damit bspw. ein Gruppiertisch gemeint sein, an dem der Manipulator oder die Mehrzahl von Manipulatoren die Artikel, Gebinde oder Stückgüter in ein Lagenbild verschiebt, dass sich zur Stapelung und Palettierung eignet.

Eine weitere Variante des erfindungsgemäßen Verfahrens zur Bildung von flächigen Lagen aus nebeneinander stehenden Artikeln, Stückgütern, Gebinden o. dgl. kann vorsehen, dass die Artikel, Stückgüter oder Gebinde auf dem Lagenbildungsplatz oder Gruppiertisch mit wenigstens einem Manipulator befördert und innerhalb einer Bewegungsebene in einer Weise verschoben und/oder gedreht werden, dass sie eine stapel- und/oder palettierbare Lage bilden. Zudem können die Stell-, Dreh- und/oder Verschiebebewegungen des wenigstens einen Manipulators derart bzw. dadurch an die zeitlich konstanten oder im Zeitablauf variablen oder schwankenden Mengen der mittels der an den Zuführstationen oder bspw. mittels wenigstens zwei Transportspuren und/oder Verbindungsspuren jeweils zum Lagenbildungsplatz oder Gruppiertisch beförderten Mengen an Artikeln, Stückgütern oder Gebinden angepasst werden, dass bei Abweichungen oder Schwankungen einer Bereitstellungsfrequenz, insbesondere bei unterschiedlichen Bereitstellungsfrequenzen an den zwei oder mehr Zuführstationen an bereitgestellten Artikeln, Stückgütern oder Gebinden ein modifizierter und/oder angepasster Verschiebeweg zur Bildung der stapel- und/oder palettierbaren Lage gewählt wird.

Eine dynamische Anpassung des wenigstens einen Manipulators bzw. der Mehrzahl von Manipulatoren kann in diesem Zusammenhang bedeuten, dass die Manipulatoren in ihren Bewegungsabläufen bereits auf kleinere Schwankungen der Bereitstellungsfrequenzen, insbesondere auf voneinander abweichende Bereitstellungsfrequenzen der Artikel, Gebinde oder Stückgüter an den zwei oder mehr Zuführstationen reagieren. Insbesondere kann auch vorgesehen sein, dass die Manipulatorsteuerung auf Lücken in der Artikelfolge reagiert, bspw. wenn in der Lücke bzw. in einer Soll-Artikelfolge nur ein einzelner Artikel fehlt. Mit einer abgestuften Steuerung kann bspw. gemeint sein, dass die Manipulatoren zwischen zwei oder mehr Betriebsmodi umgeschaltet werden können, die bspw. zwischen einem ununterbrochenen Förderbetrieb und einer lückenhaften Förderung unterscheiden. Die Umschaltung in einen zweiten Betriebsmodus muss hierbei nicht bereits bei kleinen Lücken erfolgen, sondern kann bspw. dann vorgesehen sein, wenn die Lücke eine Größe aufweist, bei der zwei oder mehr Artikel hintereinander fehlen. Es kann wahlweise zwischen zwei oder mehr Betriebsmodi umgeschaltet werden, insbesondere jedoch zwischen vielen Betriebsmodi, so dass letztlich die flexible Anpassung ohne vorgegebene Reihenfolge resultieren kann. Je mehr unterschiedliche Stufen der Anpassungen vorgesehen sind, desto eher kommt diese Umschaltung einer stufenlosen bzw. dynamischen Anpassung der Manipultorsteuerung nahe. Typischerweise jedoch bedeutet die dynamische Anpassung des Manipulators bzw. der Manipulatoren an voneinander abweichende Mengen und/oder Bereitstellungsfrequenzen an Fördergütern bzw. an jeweils unterschiedliche Abweichungen der von den zwei oder mehr Zuführstationen und/oder Transportspuren beförderten Güter, Artikel oder Gebinde eine Veränderung der jeweils auf dem Lagenbildungsplatz oder Gruppiertisch ablaufenden Verschiebewege, wobei eine jeweils sinnvolle Kombination mehrerer Verschiebewege bspw. aus gespeicherten Zuordnungstabellen, Kennfeldern o. dgl. einer zentralen Steuerung abgerufen werden kann. Bei Überschreitung eines vorgegebenen Grenzwertes, der Lücken zwischen Artikeln oder Abweichungen der mit den zwei oder mehr Transportspuren beförderten Artikel, Stückgüter oder Gebinde voneinander definieren kann, wird erfindungsgemäß demzufolge von einer zuvor als sinnvoll erkannten und vordefinierten Bewegungsvorschrift des Manipulator bzw. der Manipulatoren abgewichen und ein alternatives Bewegungsprofil gewählt, bei dem sich insgesamt abweichende Verschiebewege für die Fördergüter zur Herstellung des gewünschten Lagenbildes ergeben.

Auf diese Weise wird der zentrale Nachteil der bekannten und bisher verwendeten Verfahren beseitigt, die allesamt bei Ausfall einer von mehreren Transportspuren in einen Wartezustand übergehen, bis der Artikeltransport wieder reibungslos läuft. Das erfindungsgemäße Verfahren ermöglicht es dagegen, auch bei Verzögerungen, Stockungen oder sogar bei einem Ausfall einer von mehreren Zuführstationen oder Transportspuren den Sortier- und Lagenbildungsbetrieb weitgehend unverändert aufrecht zu erhalten, ggf. bei reduziertem Materialdurchsatz aufgrund des sich dynamisch an die aktuelle Fördersituation anpassenden Manipulators bzw. der Mehrzahl von Manipulatoren.

Wahlweise können mit dem erfindungsgemäßen Verfahren die Artikel, Stückgüter oder Gebinde auf dem Lagenbildungsplatz oder Gruppiertisch mit dem wenigstens einen Manipulator so verschoben und/oder gedreht werden, dass sie auf einem dem Lagenbildungsplatz oder Gruppiertisch nachgeordneten Transportabschnitt eine stapel- und/oder palettierbare Lage bilden oder zu einer solchen zusammenschiebbar sind. Die Sortiergeschwindigkeit ist je nach Fördersituation auf einer oder mehreren der die Artikel, Stückgüter oder Gebinde zum Lagenbildungsplatz oder Gruppiertisch fördernden Transportspuren stufenlos reduzierbar oder steigerbar, je nach den aktuell gegebenen Erfordernissen oder Möglichkeiten des Durchsatzes.

Selbst bei einem vollständigen Ausfall einer Zuführstation oder Transportspur, bspw. durch deren Stillstand oder durch das Fehlen von darauf bereitgestellten und/oder beförderten Artikeln, Stückgütern oder Gebinden, kann das Verfahren einen Ausgleich ermöglichen, indem die Steuerung des Manipulators bzw. der Manipulatoren so angepasst wird, dass sie die zu einer Lage zu verschiebenden Artikel, Stückgüter oder Gebinde nur aus dem Bereich der unverändert fördernden oder bereitstellenden Transportspur bzw. Zuführstation holen und auf der gesamten Fläche des Lagenbildungsplatz oder Gruppiertisches in der benötigten Weise verteilen. Das Verfahren ermöglicht auf diese Weise eine äußerst flexible Anpassung an eine lückenhafte, stockende und/oder ausfallende Zuförderung an bzw. auf einer Transportspur bzw. an eine lückenhafte, stockende und/oder ausfallende Bereitstellung an einer Zuführstation. Sobald dort Lücken auftreten, werden die Artikel auf dem Lagenbildungsplatz oder Gruppiertisch durch die erfindungsgemäße Anpassung der Manipulatorsteuerung auf andere Weise gruppiert, so dass im Wesentlichen auf die unverändert laufende(n) weitere(n) Transportspur(en) oder unverändert bereitstellende Zuführstationen zurückgegriffen wird. Vorzugsweise erfolgt diese Anpassung der Manipulatorsteuerung dynamisch und so schnell, dass die übrigen Zuführstationen oder Transportspuren weitgehend unbeeinflusst bleiben und insbesondere mit unveränderter Fördergeschwindigkeit weiter betrieben werden können. Die Manipulatoren müssen die Artikel oder Stückgüter bei einem solchermaßen angepassten Betrieb ggf. über weitere Wege verschieben, um dieselben Lagenbilder wie bei einem ungestörten Betrieb aller Zuführspuren oder -stationen erzeugen zu können.

In einem angepassten Betriebsmodus, bei dem bspw. eine von mehreren Transportspuren oder Zuführstationen weiterhin ununterbrochen und ohne Lücken die Artikel fördert oder bereitstellt, während eine weitere Transportspur oder Zuführstation einen lückenhaften Transport oder eine lückenhafte Bereitstellung von Artikeln zeigt, kann die Artikellage auf dem Lagenbildungsplatz oder Gruppiertisch bspw. in einer angepassten Weise gruppiert und zusammengestellt werden. Beim Auftreten einer Lücke bei der Förderung oder Bereitstellung der Artikel können bspw. ein bestimmter, zuvor virtuell nummerierter Artikel sowie alle weiteren folgenden Artikel fehlen. In diesem Fall können die Artikelnummern auf der ungestört fördernden Transportspur oder der unverändert bereitstellenden Zuführstation umgeordnet werden, so dass die fehlende Nummer der weiter fördernden Transportspur bzw. der weiter bereitstellenden Zuführstation zugeordnet und passend einsortiert wird. Diese Umordnung bzw. Umsortierung ist lediglich virtuell zu verstehen, da den Artikeln die Nummern nicht in physikalischer Weise zugeordnet sind, sondern virtuell, um für die Lagenbildung und die dynamische Anpassbarkeit der Gruppiertischsteuerung mit dem wenigstens einen Manipulator ein Ordnungsprinzip zur Verfügung zu haben.

Um eine Anpassung an sich verändernde Transportmengen zu ermöglichen, kann die Sortier- und/oder Verschiebereihenfolge der durch den wenigstens einen Manipulator verschobenen und/oder gedrehten Artikel, Stückgüter oder Gebinde in Anpassung an voneinander abweichende Mengen und/oder an voneinander abweichenden Bereitstellungsfrequenzen der mittels der wenigstens zwei Transportspuren und/oder Verbindungsspuren oder der Zuführstationen jeweils zum Lagenbildungsplatz oder Gruppiertisch beförderten oder dort bereitgestellten Mengen an Artikeln, Stückgütern oder Gebinden aus einer Mehrzahl oder Vielzahl von möglichen Bewegungsmustern ausgewählt werden. Diese Bewegungsmuster oder Steuervorschriften für die Manipulatoren können bspw. in Kennfeldern abgespeichert werden und je nach Belegungsgrad der Transportspuren abgerufen und nach Zweckmäßigkeit, d.h. im Interesse einer möglichst gering zu haltenden Verzögerung der Verarbeitungsgeschwindigkeiten, ausgewählt werden.

Wahlweise kann das erfindungsgemäße Verfahren veränderliche Fördergeschwindigkeiten der Transportspuren oder veränderliche Bereitstellungsgeschwindigkeiten und/oder -frequenzen an den Zuführstationen vorsehen. So kann insbesondere bei Stockungen oder einem Ausfall auf einer der Transportspuren oder Zuführstationen eine entsprechende Geschwindigkeitserhöhung der jeweils nicht betroffenen Spur oder Station ausreichend hohe Gruppier- und Lagenbildungsdurchsätze sicherstellen, da die Gesamtmenge der beförderten Artikel, Stückgüter oder Gebinde reduziert ist, so dass die Manipulatoren innerhalb einer bestimmten Zeit weniger Stückgüter zu drehen und/oder zu verschieben haben. Aus diesem Grund kann eine mäßige Geschwindigkeitserhöhung der mit Sollbelegung laufenden Transportspur sinnvoll sein.

Eine weitere Variante des erfindungsgemäßen Verfahrens sieht vor, dass die Bereitstellungsgeschwindigkeit oder -frequenz einer Zuführstation oder die Fördergeschwindigkeit wenigstens einer Transportspur und/oder wenigstens einer zwischen einer vorgeordneten Umreifungsstation und dem Gruppiertisch angeordneten Verbindungsspur und/oder die Sortiergeschwindigkeit des wenigstens einen Manipulators in Anpassung an die zeitlich konstanten oder im Zeitablauf variablen oder schwankenden Mengen der bereitgestellten und/oder der mittels wenigstens zwei Transportspuren und/oder Verbindungsspuren jeweils zum Lagenbildungsplatz oder Gruppiertisch beförderten Mengen an Artikeln, Stückgütern oder Gebinden reduzierbar oder steigerbar ist. Bei dieser Verfahrensvariante können die Zuführstationen oder Transportspuren bspw. Teil einer Umreifungsstation sein oder diese durchlaufen. Eine solche Umreifungsstation umfasst normalerweise zwei oder mehr Umreifungsköpfe, mit denen die Gebinde mit Umreifungen versehen werden können, so dass mehrere einzelne Artikel zu einem transportablen Gebinde zusammengefasst sind. Diese Gebinde werden mit den Manipulatoren zu Palettenlagen zusammengestellt und lagenweise palettiert. Wahlweise kann die Umreifungsstation unmittelbar an die Gruppiereinheit anschließen bzw. mit dieser verblockt sein, ggf. unter Zwischenschaltung wenigstens zweier paralleler Verbindungsspuren. Diese Verbindungsspuren können eine geeignete Länge aufweisen, die für den Aufbau und die Anordnung der einzelnen Maschinenteile zweckmäßig und notwendig ist. Eine Staustrecke zwischen der Umreifungsstation und dem Lagenbildungsplatz oder Gruppiertisch ist nicht erforderlich, da bei einer erheblichen Störung in der Umreifungstation oder in vorgeordneten Anlagenteilen die gesamte Förderung und Handhabung der Palettierstation angehalten werden kann. Eine Staustrecke ist insbesondere deshalb nicht erforderlich, da kein Schrumpftunnel o. dgl. vor der Palettierstation vorhanden ist, der bei einem Stillstand oder einer Störung der Maschine zunächst leergefahren werden müsste. Die Umreifungsstation kann deshalb in vorteilhafter Weise direkt mit der Palettierstation verblockt werden, ggf. auch mit sehr kurzen oder in ihren Längen minimierten Verbindungsspuren.

Die beschriebene Verfahrensvariante ermöglicht es, bei einer unregelmäßigen Zuführung von Gebinden einen ausreichend hohen Durchsatz der Transportstrecke in der Palettierstation aufrecht zu erhalten. Auch bei einer unregelmäßigen Zuführung der Gebinde auf einer von mehreren Transportspuren oder Zuführstationen oder bei teilweisen oder vollständigen Unterbrechungen wenigstens einer der Transportspuren innerhalb oder außerhalb der Umreifungsstation wird dabei die Palettierung und ein ausreichend hoher Handhabungs- und Transportdurchsatz aufrecht erhalten. Somit ist auch die der Palettierung vorgeordnete Umreifungsstation in die dynamische Regelung eingebunden, so dass bei einer Störung eines der Umreifungsköpfe und/oder bei einem Ausfall eines Umreifungskopfes oder mehrerer Umreifungsköpfe in einer der Spuren die Palettierung der Gebinde mit reduzierter Verarbeitungsgeschwindigkeit weiterlaufen kann.

Eine besonders sinnvolle Ergänzung des erfindungsgemäßen Verfahrens sieht eine geeignete Sensorik zur Erkennung der Belegungsgrade der zwei oder mehr parallelen oder nicht parallel zueinander angeordneten Transportspuren oder Verbindungsspuren bzw. der Belegungsgrade an den Zuführstationen vor. Diese Sensorik kann insbesondere Lichtschranken, Bilderfassungs- und Auswerteeinrichtungen wie Kameras o. dgl. umfassen. Wahlweise können darüber hinaus auch mechanische und/oder induktiv arbeitende Sensoreinrichtungen eingesetzt werden, um die aktuellen Belegungsgrade der Transportspuren oder Zuführstationen jederzeit erfassen und auswerten zu können. Sinnvollerweise ist jeder vorhandenen Transportspur oder Zuführstation mindestens eine Sensoreinheit zur Erkennung ihres Belegungsgrades zugeordnet, deren ausgewertete Signale zur Ansteuerung der Manipulatoren und zur dynamischen Anpassung deren Bewegungssteuerung an unterschiedliche Belegungsgrade und/oder Funktionszustände der Transportspuren oder Zuführstation eingesetzt werden. Diese Sensorik kann sinnvollerweise auch dahingehend ergänzt sein, dass die Funktionsfähigkeit der Umreifungsköpfe der optionalen Umreifungsstation jederzeit erfasst und an eine zentrale Auswerteeinheit übermittelt wird.

Dem Lagenbildungsplatz oder Gruppiertisch kann mindestens ein Manipulator zugeordnet sein. Wahlweise sind dem Lagenbildungsplatz oder Gruppiertisch zwei oder mehr hintereinander angeordnete Manipulatoren zugeordnet. Als Manipulator wird im Zusammenhang der vorliegenden Erfindung jede Einrichtung angesehen, die in der Lage und geeignet ist, die von den Transportspuren an den Lagenbildungsplatz oder Gruppiertisch übergebenen Artikel, Stückgüter und/oder Gebinde in eine gewünschte Richtung zu verschieben und/oder um ihre Vertikalachse(n) zu drehen, um ein gewünschtes Lagenbild herzustellen. Als Manipulatoren können somit bspw. Greifarme eingesetzt werden, die mittels Portalrobotern beweglich über der Bewegungsebene bzw. dem Lagenbildungsplatz oder Gruppiertisch verfahrbar, drehbar, heb- und senkbar sind, wobei gleichzeitig die Greifarme geöffnet oder geschlossen werden können. Die Manipulatoren können bspw. auch als sog. Knickarmroboter ausgebildet sein. Als Manipulatoren kommen bei allen Varianten der erfindungsgemäßen Vorrichtung grundsätzlich alle denkbaren und in der Praxis verfügbaren Handhabungseinrichtungen in Frage, wie bspw. Portalroboter, Knickarmroboter oder andere Roboter mit mehrachsiger Steuerung.

Das mit den Manipulatoren hergestellte Lagenbild kann anschließend ggf. durch seitliches Aneinanderschieben verdichtet werden, bspw. um die Lücken zwischen den zum gewünschten Lagenbild zusammengeschobenen Artikel, Stückgüter und/oder Gebinde zu verringern. Dieser Vorgang kann bspw. im Bereich eines sog. Lagenbildetischs durchgeführt werden, der dem Gruppiertisch mit den ihm zugeordneten Manipulatoren nachgeordnet ist. Dem Lagenbildetisch kann, sofern er vorhanden ist, eine Übernahme- oder Palettiereinrichtung nachgeordnet sein, die dem Stapeln der Lagen auf Paletten dienen kann. Diese Übernahme- oder Palettiereinrichtung kann bspw. einen sog. Jalousiekopf, Jalousiegreiferkopf o. dgl. umfassen, der die zusammengeschobenen Lagen übernimmt und nacheinander jeweils auf eine zuvor übergebene Lage mit Artikeln, Stückgütern und/oder Gebinden stapelt, bis eine zuvor definierte Höhe von bspw. auf einer Palette aufeinander gestapelten Artikeln, Stückgütern und/oder Gebinden erreicht ist.

Eine weitere, besondere vorteilhafte Variante des erfindungsgemäßen Verfahrens kann es ermöglichen, Lagenbilder mit verschiedenen Sorten von Artikeln, Stückgütern und/oder Gebinden jeweils in gewünschter Weise veränderlich zusammenzustellen. So kann es bspw. auch ohne Störung oder Stauung im Bereich einer der Transportspuren durchaus gewünscht sein, die von der Mehrzahl von Transportspuren angelieferten unterschiedlichen Sorten in jeweils unterschiedlicher und/oder dynamisch veränderlicher Zusammenstellung zu einzelnen Lagen zusammenzuführen.

Die vorliegende Erfindung umfasst zur Erreichung des oben genannten Ziels weiterhin eine Vorrichtung zur Bildung von palettierfähigen Lagen aus nebeneinander stehenden Artikeln, Stückgütern, Gebinden o. dgl. auf einem Lagenbildungsplatz oder Gruppiertisch, mit wenigstens zwei räumlich voneinander entfernten und/oder räumlich versetzten Zuführstationen, Transportspuren, Verbindungsspuren o. dgl., mit wenigsten einem programmgesteuerten Manipulator zum Abholen und/oder Überführen einzelner oder mehrerer Artikel, Stückgüter oder Gebinde von den Zuführstationen oder Transportspuren und zum Positionieren durch Drehen und/oder Verschieben der Artikel, Stückgüter oder Gebinde in vorgebbare Freigabepositionen auf dem Lagenbildungsplatz. Die Programmsteuerung des Manipulators kann dessen Bewegungen in Abhängigkeit von einer momentanen Bereitstellungssituation der Artikel, Stückgüter oder Gebinde an den wenigstens zwei Zuführstationen selektiv und ohne eine festgelegte Reihenfolge steuern. Wahlweise können den wenigstens zwei Zuführstationen jeweils Sensoreinrichtungen zur Erkennung ihres Belegungsgrades an bereitgestellten oder beförderten Artikeln, Stückgütern oder Gebinden zugeordnet sein, die mit einer Steuereinrichtung zur dynamisch an zeitlich konstante oder im Zeitablauf variable oder schwankende Mengen, insbesondere an voneinander abweichende Mengen der auf den wenigstens zwei Zuführstationen bereitgestellten Mengen an Artikeln, Stückgütern oder Gebinden anpassbaren Ansteuerung des wenigstens einen Manipulators gekoppelt sind. Weiterhin kann dem wenigstens einen Manipulator des Lagenbildungsplatzes oder Gruppiertischs eine Programmsteuerung zur Auswahl eines passenden oder optimierten Bewegungsmusters zur Drehung und/oder Verschiebung der Artikel, Stückgüter oder Gebinde aus einer Vielzahl von verfügbaren Bewegungsmustern in Abhängigkeit von voneinander abweichenden Mengen oder Frequenzen an bereitgestellten Artikeln, Stückgütern oder Gebinden zugeordnet sein.

Eine Variante der Vorrichtung zur Bildung von flächigen Lagen aus nebeneinander stehenden Artikeln, Stückgütern, Gebinden o. dgl., kann wenigstens zwei Transportspuren zur Beförderung der Artikel, Stückgüter oder Gebinde zu einem Gruppiertisch mit wenigstens einem Manipulator aufweisen, der zur Verschiebung und/oder Drehung der Artikel, Stückgüter oder Gebinde innerhalb einer Bewegungsebene zu deren Überführung in eine stapel- und/oder palettierbare Lage vorbereitet ist. Den wenigstens zwei Transportspuren können vorzugsweise jeweils Sensoreinrichtungen zur Erkennung ihres Belegungsgrades an beförderten Artikeln, Stückgütern oder Gebinden zugeordnet sein, die mit einer Steuereinrichtung zur dynamisch oder abgestuft an zeitlich konstante oder im Zeitablauf variable oder schwankende Mengen der auf den wenigstens zwei Transportspuren zum Gruppiertisch beförderten Mengen an Artikeln, Stückgütern oder Gebinden anpassbaren Ansteuerung des wenigstens einen Manipulators gekoppelt sind. Weiterhin kann dem Gruppiertisch mit dem wenigstens einen Manipulator ein Transportabschnitt zur Palettierung und/oder Stapelung der zuvor gebildeten Lagen mit Artikeln, Stückgütern und/oder Gebinden nachgeordnet sein.

Dem wenigstens einen Manipulator des Gruppiertischs kann bspw. eine Programmsteuerung zur Auswahl eines passenden oder optimierten Bewegungsmusters zur Drehung und/oder Verschiebung der Artikel, Stückgüter oder Gebinde aus einer Vielzahl von verfügbaren Bewegungsmustern in Abhängigkeit von voneinander abweichenden Mengen der von den wenigstens zwei Transportspuren geförderten Artikeln, Stückgütern oder Gebinden zugeordnet sein.

Dem Gruppiertisch kann wahlweise wenigstens eine Umreifungsstation mit einem oder mehreren Umreifungsköpfen vorgeordnet sein, die direkt mit dem Gruppiertisch verblockt oder mit diesem über zwei oder mehr Verbindungsspuren zum Transport von mittels der Umreifungsstation umreiften Gebinden gekoppelt ist. Eine entsprechende Variante der Transportstrecke umfasst eine Umreifungsstation, die der Gruppierstation vorgeordnett ist. In der dem Gruppiertisch vorgeordneten Umreifungsstation werden die beförderten Artikel jeweils mit mehreren Umreifungsköpfen mit gebindebildenden Umreifungen zusammengefasst, so dass im weiteren Transportverlauf in Förderrichtung nicht mehr einzelne Artikel, sondern Gebinde mit jeweils mehreren Artikeln, die mittels Umreifungsbändern zusammengehalten sind, transportiert und palettiert werden. Die Umreifungsstation ist wahlweise direkt mit der Gruppierstation verbunden oder über parallele Verbindungspuren mit dieser gekoppelt. Die Verbindungsspuren können eine geeignete Länge aufweisen, die für den Aufbau und die Anordnung der einzelnen Maschinenteile zweckmäßig und notwendig ist. Sie können ggf. auch entfallen. Eine Staustrecke zwischen der Umreifungsstation und dem Gruppiertisch ist nicht erforderlich, da bei einer erheblichen Störung in der Umreifungstation oder in vorgeordneten Anlagenteilen die gesamte Förderung und Handhabung der Palettierstation angehalten werden kann. Eine Staustrecke ist insbesondere deshalb nicht erforderlich, da kein Schrumpftunnel o. dgl. vor der Palettierstation vorhanden ist, der bei einem Stillstand oder einer Störung der Maschine zunächst leergefahren werden müsste. Die Umreifungsstation kann deshalb in vorteilhafter Weise direkt mit der Palettierstation verblockt werden, ggf. auch mit sehr kurzen oder in ihren Längen minimierten Verbindungsspuren. Die erwähnte Variante der erfindungsgemäßen Vorrichtung ermöglicht es, bei einer unregelmäßigen Zuführung von Gebinden einen ausreichend hohen Durchsatz der Transportstrecke in der Palettierstation aufrecht zu erhalten. Auch bei einer unregelmäßigen Zuführung der Gebinde auf einer von mehreren Transportspuren oder bei teilweisen oder vollständigen Unterbrechungen wenigstens einer der Transportspuren innerhalb oder außerhalb der Umreifungsstation wird dabei die Palettierung und ein ausreichend hoher Handhabungs- und Transportdurchsatz aufrecht erhalten. Die Umreifungsstation ist auf diese Weise in die dynamische Regelung eingebunden, so dass bei einer Störung eines der Umreifungsköpfe und/oder bei einem Ausfall eines Umreifungskopfes oder mehrerer Umreifungsköpfe in einer der Spuren die Palettierung der Gebinde mit reduzierter Verarbeitungsgeschwindigkeit weiterlaufen kann.

Die Programmsteuerung des wenigstens einen Manipulators des Gruppiertischs kann bspw. mit einer Steuerungseinrichtung zur Steuerung und/oder Überwachung der Umreifungsköpfe zur Anpassung und/oder Auswahl des Bewegungsmusters zur Drehung und/oder Verschiebung der Artikel, Stückgüter oder Gebinde gekoppelt sein, wodurch eine sehr schnelle Anpassung der Manipulatorsteuerung an sich verändernde Förderbedingungen der zum Gruppiertisch beförderten Artikel, Stückgüter etc. ermöglicht ist, um die Verschiebewege und/oder Drehbewegungen anpassen zu können.

Wenn im Zusammenhang der vorliegenden Erfindung von Transportspuren die Rede ist, so sind damit grundsätzlich alle Varianten von Fördereinrichtungen oder Zuführeinrichtungen oder Zuführstationen umfasst, bspw. auch die Fördereinrichtungen, die durch Umreifungsstationen laufen, die über kurze Verbindungsabschnitte bzw. Verbindungsspuren mit dem Gruppiertisch gekoppelt sind. Wahlweise können dem Lagenbildungsplatz oder Gruppiertisch oder den Lagenbildungsplätzen oder Gruppiertischen vorgeordnete Verarbeitungsstationen wie bspw. die erwähnte Umreifungsstation auch unmittelbar mit dem Lagenbildungsplatz oder Gruppiertisch verblockt sein. Alle diese Fördereinrichtungen, die Teil von vorgeordneten Verarbeitungseinrichtungen sind, sind als Transportspuren oder Zuführstationen im Sinne der Erfindung anzusehen.

Zusammenfassend kann es als ein wesentlicher Aspekt der Erfindung angesehen werden, dass die vorgegebenen Lagenbilder bei vorgegebenen Artikel-, Stückgut- oder Gebindepositionen, die mit den Manipulatoren auf den Lagenbildungsplatzen oder Gruppiertischen hergestellt werden, in jeweils unterschiedlicher Weise von den zwei oder mehr Transportspuren oder Zuführstationen arrangiert werden können. Durch eine geeignete Sensorik wird erkannt, wenn die Menge der von wenigstens einer der Transportspuren zugelieferten oder an den Zuführstationen bereitgestellten Stückgüter oder Artikel oder Gebinde von einem Sollwert abweicht und insbesondere gegenüber der von der anderen Transportspur oder Zuführstation beförderten oder bereitgestellten Menge reduziert ist. Nach Erkennung einer solchen Abweichung wird der vorgegebene Bewegungsablauf beim Drehen und Verschieben der zu arrangierenden Güter geändert. Bei gleichbleibenden Endpositionen ändern sich zumindest einige der Verschiebewege, wenn auch normalerweise nicht alle.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer einfachen Variante einer Transportstrecke, in der eine Lagenbildung aus hintereinander transportierten Artikeln erfolgt.
Fig. 2a zeigt eine schematische Darstellung einer Lagenbildung bei einem ungestörten Artikeltransport.
Fig. 2b zeigt die Verschiebewege für die Artikel bei ungestörtem Artikeltransport gemäß Fig. 2a.
Fig. 2c zeigt eine schematische Darstellung einer Lagenbildung bei einem in einer von zwei Transportspuren zumindest teilweise unterbrochenen Artikeltransport.
Fig. 2d zeigt die Verschiebewege für die Artikel bei teilweise unterbrochenem Artikeltransport gemäß Fig. 2c.
Fig. 2e zeigt eine schematische Darstellung einer Lagenbildung bei einem in einer von zwei Transportspuren zumindest lückenhaften Artikeltransport.
Fig. 2f zeigt die Verschiebewege für die Artikel bei lückenhaftem Artikeltransport gemäß Fig. 2e.
Fig. 2g zeigt eine schematische Darstellung einer Lagenbildung bei einem in einer von zwei Transportspuren vollständig unterbrochenen Artikeltransport.
Fig. 2h zeigt die Verschiebewege für die Artikel bei unterbrochenem Artikeltransport gemäß Fig. 2g.
Fig. 3 zeigt eine weitere Variante der Transportstrecke zur Lagenbildung aus Artikeln, die in zwei parallelen Transportspuren zu einem Gruppiertisch befördert werden.
Fig. 4 zeigt die Transportstrecke gemäß Fig. 3, bei der in einer der Transportspuren unregelmäßige Lücken zwischen aufeinander folgenden Artikeln auftreten.
Fig. 5 zeigt die Transportstrecke gemäß Fig. 3, bei welcher der Artikeltransport bei einer der Transportspuren ausfällt.
Fig. 6 zeigt eine weitere Variante der Transportstrecke zur Lagenbildung aus Artikeln, die von einer Umreifungsstation kommend in zwei parallelen Transportspuren zu einem Gruppiertisch befördert werden.

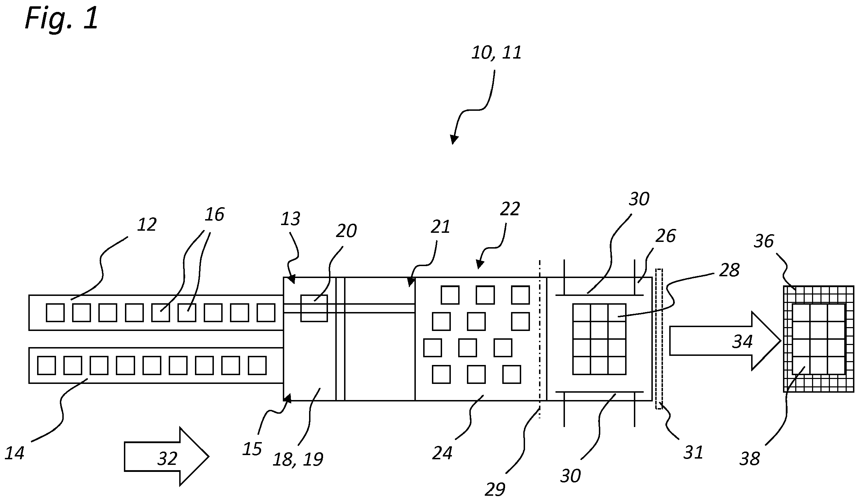

Für gleiche oder gleich wirkende Elemente der Erfindung werden in den Figuren 1 bis 6 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Die schematische Draufsicht der Fig. 1 zeigt eine einfache Variante einer Transportstrecke 11 einer Palettierstation 10, in der eine Lagenbildung aus in mehreren Reihen hintereinander transportierten Artikeln erfolgen soll. Die Transportstrecke 11 umfasst im gezeigten Ausführungsbeispiel zwei allgemein als Zuführstationen 13 bzw. 15 bezeichnete parallele Transportspuren 12 und 14, auf denen in einem Normalzustand jeweils ununterbrochene Reihen von Artikeln 16 zu einem allgemein als Lagenbildungsplatz 19 bezeichneten Gruppiertisch 18 befördert und übergeben werden, der einen Manipulator 20 zur Bildung einer losen Lage 22 aus den Artikeln 16 umfasst. Als obere oder erste Zuführstation 13 wird der Raum oder räumliche Bereich verstanden, innerhalb dessen der Manipulator 20 einen dort bereitgestellten Artikel 16 übernehmen und verschieben und/oder drehen kann. Im gezeigten Ausführungsbeispiel wird die obere oder erste Zuführstation 13 durch die obere Transportspur 12 gebildet bzw. mit Artikeln 16 beliefert. Als untere oder zweite Zuführstation 15 wird der Raum oder räumliche Bereich verstanden, innerhalb dessen der Manipulator 20 einen dort bereitgestellten Artikel 16 übernehmen und verschieben und/oder drehen kann. Im gezeigten Ausführungsbeispiel wird die untere oder zweite Zuführstation 15 durch die untere Transportspur 14 gebildet bzw. mit Artikeln 16 beliefert. Der Bereich, an dem der Manipulator 20 die Artikel 16 in der gewünschten und für die Erzeugung eines vorgegebenen Lagenbildes 22 freigibt, wird allgemein als Freigabeposition 21 bezeichnet.

Die mit dem Manipulator 20 durch Verschieben und/oder Drehen der Artikel 16 gebildete lose Lage 22 wird nach ihrer mittels des Manipulators 20 durchgeführten Zusammenstellung und nach Passieren der Freigabeposition 21 zunächst in Förderrichtung 32 gegen eine Anschlageinrichtung 29 geschoben, die bspw. durch ein vertikal heb- und senkbares Anschlagblech gebildet sein kann, das zum Zusammenschieben der Lage 22 nach oben über die Ebene des Gruppiertisches 18 oder Lagenbildungsplatzes 19 gehoben und zum weiteren Transport der in Förderrichtung 32 lückenlos zusammengeschobenen Lage 22 wieder nach unten gesenkt werden kann. Danach wird diese Lage 22 mittels einer geeigneten Horizontalfördereinrichtung 24 nach rechts zu einem Lagenbildetisch 26 befördert, auf dem durch Zusammenschieben der Artikel 16 der losen Lage 22 quer zur Förderrichtung 32 eine geschlossene Lage 28 aus den Artikeln 16 gebildet wird. Zu dem genannten Zweck des Zusammenschiebens weist der Lagenbildetisch 26 beidseitig der Transportstrecke 11 geeignete Schiebereinrichtungen 30 auf, die in senkrechter Richtung zur Förderrichtung 32 der Lagen 22 bzw. 28 zustellbar sind, um die Artikel 16 der losen Lage 22 nach Bedarf aneinander schieben zu können.

Als Manipulator 20 wird im Zusammenhang der vorliegenden Erfindung jede Einrichtung angesehen, die in der Lage und geeignet ist, die von den Transportspuren 12 und 14 bzw. von den Zuführstationen 13 und 15 an den Gruppiertisch 18 oder Lagenbildungsplatz 19 übergebenen Artikel 16, Stückgüter und/oder Gebinde in eine gewünschte Richtung zu verschieben und/oder um ihre Vertikalachse(n) zu drehen, um ein gewünschtes Lagenbild 22 herzustellen. Dieses Lagenbild 22 wird, wie oben erwähnt, anschließend durch Schieben gegen die Anschlageinrichtung 29 sowie durch seitliches Aneinanderschieben mittels der Schiebereinrichtungen 30 verdichtet, bspw. um die Lücken zwischen den zum gewünschten geschlossenen Lagenbild 28 zusammengeschobenen Artikel 16, Stückgüter und/oder Gebinde zu verringern. Dieser Vorgang kann bspw. im Bereich des Lagenbildetischs 26 durchgeführt werden, der dem Gruppiertisch 18 mit den ihm zugeordneten Manipulatoren 20 nachgeordnet ist.

Nach dem Ausbilden der palettierbaren Lage 28 auf dem Lagenbildetisch 26 wird die geschlossene Lage 28 mittels einer geeigneten Übergabe- und/oder Transporteinrichtung 34 als komplette Lage auf einer Palette 36, ggf. durch Stapeln auf dort bereits liegenden palettierten Lagen 38, abgelegt. Sobald auf der Palette 36 eine definierte Maximalzahl von Lagen 38 übereinander abgelegt sind, kann sie zum weiteren Verpacken und/oder zum Versand oder zur Einlagerung abtransportiert werden. Zwischen dem Lagenbildetisch 26 und der Übergabe- und/oder Transporteinrichtung 34 kann bei Bedarf eine Überschubeinrichtung 31 wie bspw. ein klappbares Überschubblech o. dgl. angeordnet sein, die/das die Übergabe zu einer Transporteinrichtung unterstützen kann.

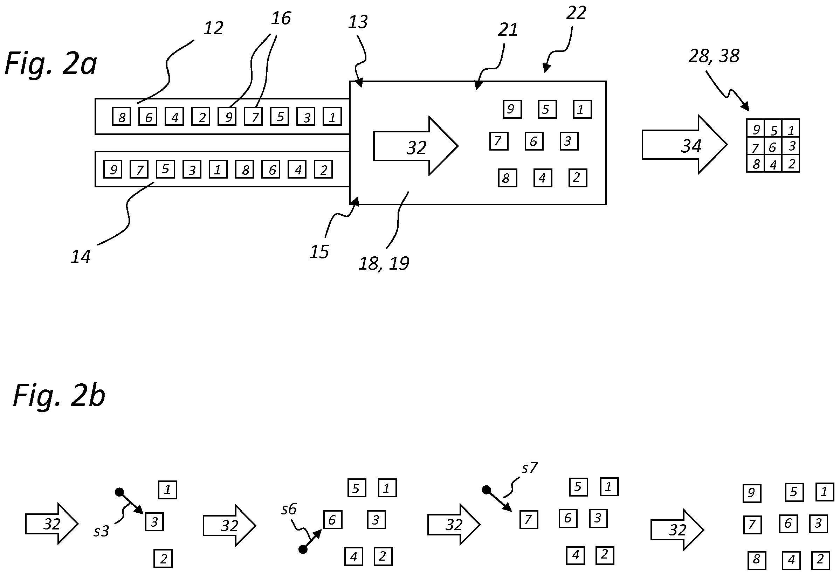

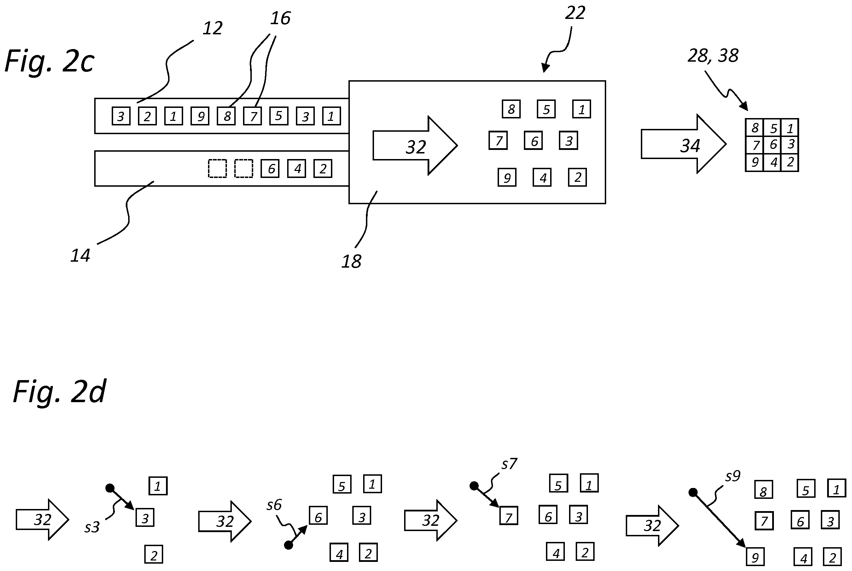

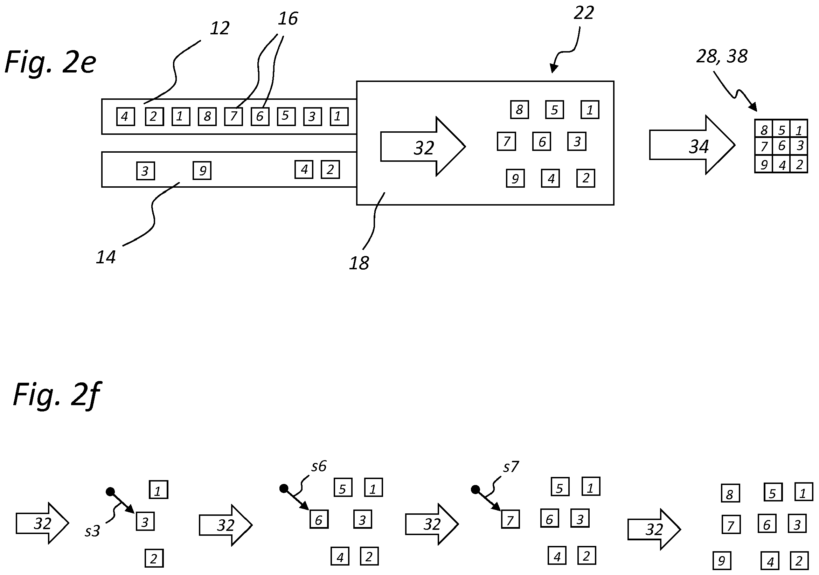

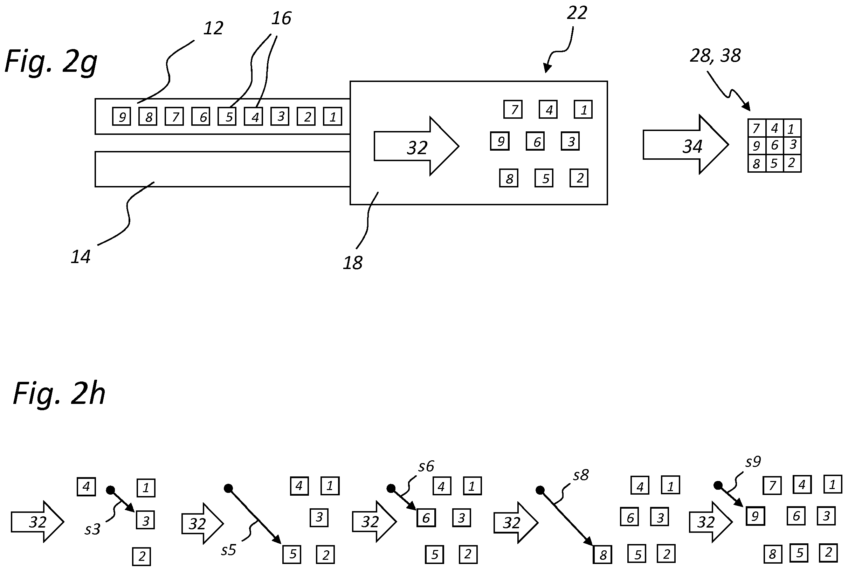

Die vorliegende Erfindung soll es nun ermöglichen, auch bei einer unregelmäßigen Zuführung von Artikeln 16, wie dies nachfolgend anhand der Figuren 2 bis 6 verdeutlicht ist, einen ausreichend hohen Durchsatz der Transportstrecke 11 in der Palettierstation 10 aufrecht zu erhalten. Wenn im vorliegenden Zusammenhang allgemein von Artikeln 16 die Rede ist, so können dies grundsätzlich alle Arten von Verpackungen, Pakete, Stückgüter, Gebinde o. dgl. sein, bspw. Gebinde mit zusammengefassten Getränkebehältern, die wahlweise verpackt, mit einer Schrumpffolie umhüllt und/oder mittels Umreifungsbändern zusammengehalten sind. Auch bei einer unregelmäßigen Zuführung der Pakete, Stückgüter, Gebinde oder Artikel 16 auf einer von mehreren Transportspuren 12, 14 oder bei teilweisen oder vollständigen Unterbrechungen wenigstens einer der Transportspuren 12 oder 14 wird dabei die Palettierung und ein ausreichend hoher Handhabungs- und Transportdurchsatz aufrecht erhalten.

Wenn im dargestellten Ausführungsbeispiel lediglich zwei parallele Transportspuren 12 und 14 dargestellt sind, so ist dies ebenfalls nicht einschränkend zu verstehen. Grundsätzlich können auch mehrere Transportspuren auf den Gruppiertisch 18 münden, ggf. auch in nicht paralleler Anordnung, bspw. sternförmig. Wahlweise können in der Transportstrecke 11 auch mehrere Gruppiertische 18 und/oder mehrere Manipulatoren 20 hintereinander angeordnet sein, wie dies in den Figuren 2 bis 4 durch paarweise Anordnung zweier Gruppiertische 18 mit jeweils einem Manipulator 20 angedeutet ist. Allgemein wird auch von Zuführstationen 13 und 15 gesprochen, an denen die Artikel 16 an den Manipulator 20 übergeben bzw. von diesem aufgenommen und auf dem Lagenbildungsplatz 19 in einer geeigneten Weise gedreht und/oder verschoben werden, bis sie an den Freigabepositionen 21 freigegeben werden zur Übergabe an den Lagenbildungstisch 22.

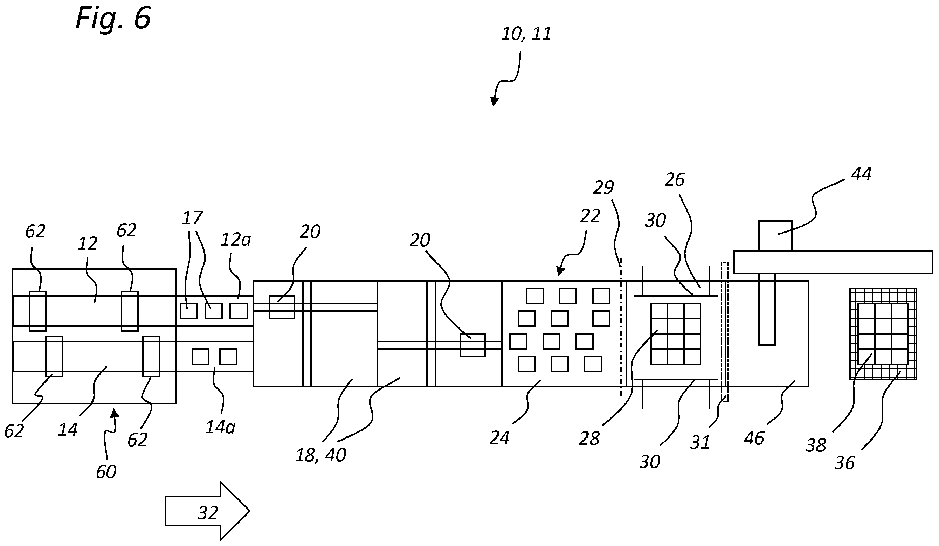

Es sei zudem darauf hingewiesen, dass die in den Figuren 1 bis 5 mit der Bezugsziffer 16 bezeichneten Artikel wahlweise auch als Gebinde 17 (vgl. Fig. 6) oder allgemein als Stückgüter zu verstehen sind. Jeder Artikel 16 kann somit wahlweise auch ein Gebinde 17 sein. Zudem kann ein Manipulator 20 bei der Dreh- oder Verschiebebewegung wahlweise auch mehr als einen Artikel 16 bzw. mehr als ein Gebinde 17 greifen, indem er bspw. zwei Artikel 16 gleichzeitig greift, dreht und/oder verschiebt.

Die schematischen Darstellungen der Figuren 2a und 2b verdeutlichen die Abläufe bei der Lagenbildung im Bereich des Lagenbildungsplatzes 19 oder Gruppiertischs 18, wenn die beiden Transportspuren 12 und 14 jeweils ununterbrochene Reihen von Artikeln 16 zum Gruppiertisch 18 fördern bzw. wenn die beiden Zuführstationen 13 und 15 ununterbrochene Folgen von Artikeln 16 bereit stellen. In der Fig. 2a wird beispielhaft verdeutlicht, wie eine lose Lage 22 aus insgesamt neun Artikeln 16, die mit den Ziffern 1 bis 9 durchnummeriert sind, gebildet wird. Die losen Lagen 22 werden anschließend zu den geschlossenen und palettierbaren Lagen 38 zusammengeschoben, wie dies bereits in Fig. 1 gezeigt ist. So fördert die erste Transportspur 12 nacheinander die Artikel 16 mit den Nummern 1, 3, 5, 7 und 9, während die zweite Transportspur 14 nacheinander die Artikel 16 mit den Nummern 2, 4, 6 und 8 fördert. Nach dem Artikel 16 mit der Nummer 9 schließt sich auf der ersten Transportspur 12 der Artikel 2, danach 4, 6 und 8 etc. an. Nach dem Artikel 16 mit der Nummer 8 schließt sich auf der zweiten Transportspur 14 der Artikel 1, danach 3, 5, 7 und 9 etc. an.

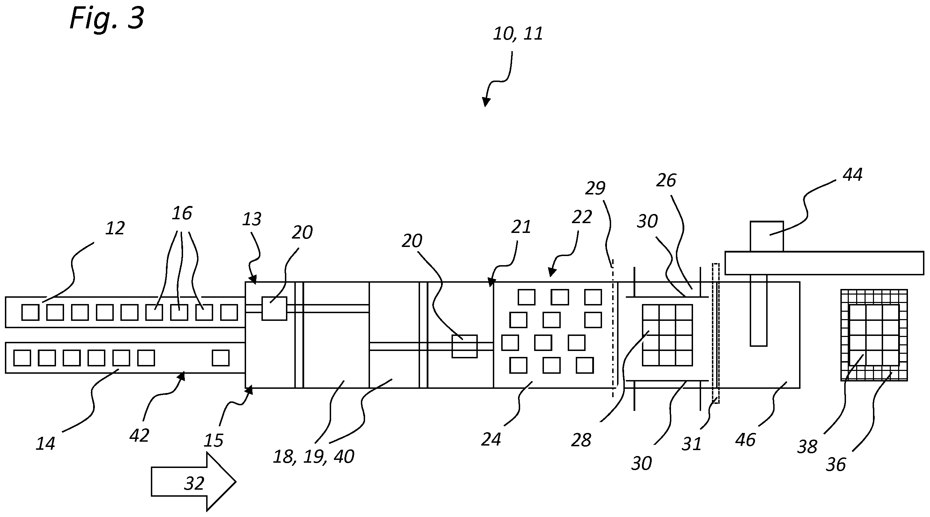

In dem in der Fig. 2a gezeigten normalen Betriebsmodus, bei dem die beiden Transportspuren 12 und 14 ununterbrochen und ohne Lücken fördern (vgl. auch Fig. 3), kann die lose Lage 22 auf dem Gruppiertisch 18 bspw. in der gezeigten Weise gruppiert und zusammengestellt werden, so dass sich in der obersten Reihe nacheinander die Artikel 16 mit den Nummern 1, 5 und 9 befinden, während in der mittleren Reihe nacheinander die Artikel 16 mit den Nummern 3, 6 und 7 angeordnet sein können. In der unteren Reihe können entsprechend die Artikel 16 mit den Nummern 2, 4 und 8 hintereinander angeordnet sein. Anschließend werden diese Artikel 16 mit den Nummern 1 bis 9 in dieser gruppierten Anordnung zur geschlossenen Lage 28 zusammengeschoben und mittels der Übergabe- und/oder Transporteinrichtung 34 ohne Veränderung des Lagenbildes zur palettierten Lage 28 überführt.

Die schematische Darstellung der Fig. 2b verdeutlicht die Verschiebebewegungen des Manipulators, die erforderlich sind, um aus den in zwei parallelen Transportspuren 12 und 14 auf den Gruppiertisch 18 beförderten Artikel 16 eine 3x3-Anordnung der losen Lage 22 zu gewinnen. Hierzu muss der in der oberen Transportspur 12 beförderte Artikel mit der Nummer 3 zunächst um den Verschiebeweg s3 zur Mitte des Lagenbildes 22 nach unten verschoben werden, wonach ein weiterer Artikel mit der Nummer 6 von der unteren Transportspur 14 um den Verschiebeweg s6 zur Mitte des Lagenbildes 22 nach oben verschoben werden muss. Schließlich wird der Artikel mit der Nummer 7 wiederum von der oberen Transportspur 12 um den Verschiebeweg s7 zur Mitte hin nach unten verschoben. Die Pfeile 32 verdeutlichen, dass während dieser Verschiebebewegungen s3, s6 und s7 des Manipulators die Förderung der Transportspuren 12 und 14 unverändert weiter läuft.

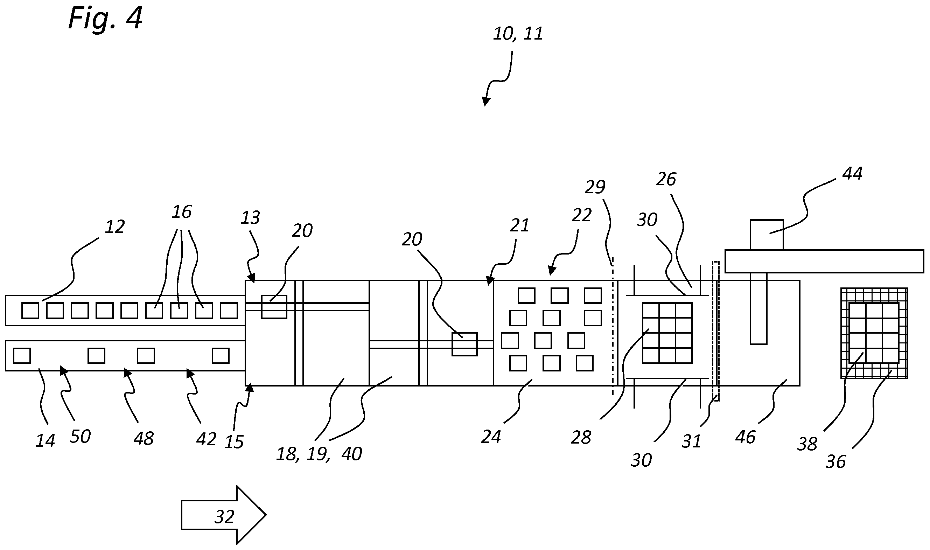

In dem in der Fig. 2c gezeigten angepassten Betriebsmodus, bei dem bspw. die obere Transportspur 12 weiterhin ununterbrochen und ohne Lücken die Artikel 16 fördert, während die untere Transportspur 14 einen lückenhaften Transport von Artikeln 16 zeigt (vgl. auch Fig. 4), kann die lose Lage 22 auf dem Gruppiertisch 18 bspw. in einer angepassten Weise (vgl. Fig. 2d) gruppiert und zusammengestellt werden. Die Lücke bei der Förderung der Artikel 16 kann in der unteren Transportspur 14 bspw. nach dem Artikel mit der Nummer 6 auftreten, so dass der Artikel mit der Nummer 8 sowie alle weiteren folgenden Artikel fehlen. Wie die Artikelfolge in der ersten Transportspur 12 verdeutlicht, werden die Artikelnummern umgeordnet, so dass die Nummer 8 der oberen Transportspur 12 zugeordnet und nach dem Artikel 16 mit der Nummer 7 einsortiert wird. Diese Umordnung bzw. Umsortierung ist lediglich virtuell zu verstehen, da den Artikeln 16 die gezeigten Nummern 1 bis 9 nicht in physikalischer Weise zugeordnet sind, sondern virtuell, um das Ordnungsprinzip bei der Lagenbildung und die dynamische Anpassbarkeit der Gruppiertischsteuerung mit dem wenigstens einen Manipulator zu verdeutlichen.

Wie erwähnt, werden somit in der oberen Transportspur 12 nach der virtuellen Umsortierung der Artikelfolge nacheinander die Artikel 16 mit den Nummern 1, 3, 5, 7, 8 und 9 und danach ggf. die ununterbrochene Reihe 1, 2, 3, usw. befördert, sofern die Störung auf der zweiten Transportspur 14 nicht behoben ist. Auf dieser zweiten Transportspur 14 werden zunächst nacheinander die Artikel 16 mit den Nummern 2, 4 und 6 befördert, bevor eine Lücke auftritt und die Artikelförderung unterbrochen ist oder abreißt. Der normalerweise nach der Nummer 6 folgende Artikel mit der Nummer 8 fehlt, so dass er in der oberen Transportspur 12 den normalerweise nach dem Artikel mit der Nummer 7 folgenden Artikel Nummer 9 verdrängt. Dieser wird in der dargestellten Weise um eine Position nach hinten umgeordnet und folgt dementsprechend dem Artikel mit der Nummer 8.

Die schematische Darstellung der Fig. 2d verdeutlicht die Verschiebebewegungen des Manipulators, die erforderlich sind, um aus den gemäß Fig. 2c in zwei parallelen Transportspuren 12 und 14 auf den Gruppiertisch 18 beförderten Artikel 16 eine 3x3-Anordnung der losen Lage 22 zu gewinnen, obwohl die untere Transportspur 14 die Artikel 16 in der in Fig. 2c gezeigten Weise lückenhaft fördert. Hierzu muss der in der oberen Transportspur 12 beförderte Artikel mit der Nummer 3 zunächst um den Verschiebeweg s3 zur Mitte des Lagenbildes 22 nach unten verschoben werden, wonach ein weiterer Artikel mit der Nummer 6 von der unteren Transportspur 14 um den Verschiebeweg s6 zur Mitte des Lagenbildes 22 nach oben verschoben werden muss. Weiterhin wird der Artikel mit der Nummer 7 wiederum von der oberen Transportspur 12 um den Verschiebeweg s7 zur Mitte hin nach unten verschoben. Schließlich muss der Artikel mit der Nummer 9 von der oberen Transportspur 12 um den relativ langen Verschiebeweg s9 ganz nach unten verschoben werden, um die in der unteren Transportspur 14 aufgetretene Lücke ausgleichen zu können. Die Pfeile 32 verdeutlichen, dass während dieser Verschiebebewegungen s3, s6, s7 und s9 des Manipulators die Förderung der Transportspuren 12 und 14 unverändert weiter läuft.

Nach der in Förderrichtung 32 folgenden Lagenbildung auf dem Gruppiertisch 18 kann gemäß Fig. 2a die lose Lage 22 bspw. in der Form zusammengestellt und gruppiert werden, dass sich in der obersten Reihe nacheinander die Artikel 16 mit den Nummern 1, 5 und 9 befinden, während in der mittleren Reihe nacheinander die Artikel 16 mit den Nummern 3, 6 und 8 angeordnet sein können. In der unteren Reihe können entsprechend die Artikel 16 mit den Nummern 2, 4 und 9 hintereinander angeordnet sein. Da die noch regulär geförderten Artikel mit den Nummern 1 bis 7 in derselben Weise in das Lagenbild der losen Lage 22 eingefügt werden können wie in Fig. 2c dargestellt, ergeben sich dabei noch keine Änderungen. Ggf. kann jedoch zunächst der Artikel mit der Nummer 8 in die obere Reihe geschoben werden, da die Manipulatorsteuerung in der Lage sein kann, permanent auf eine sich ändernde Artikelförderung zu reagieren. Da die Lücke im Artikelstrom der zweiten Transportspur 14 möglicherweise sehr kurz sein könnte, wäre die Steuerung in der Lage, dem nach der Lücke folgenden Artikel die virtuelle Nummer 9 zuzuteilen und diesen in die untere Reihe des Lagenbildes einzusortieren (vgl. Fig. 2d). Da der Artikel mit der Nummer 9 jedoch weiterhin von der oberen Transportspur 12 entnommen werden muss, ist der Manipulator für dessen Gruppierung gezwungen, den längeren Weg s9 zurückzulegen, um den letzten fehlenden Platz in der unteren Reihe des Lagenbildes zu füllen.

In dem in der Fig. 2e gezeigten angepassten Betriebsmodus, bei dem bspw. die obere Transportspur 12 weiterhin ununterbrochen und ohne Lücken die Artikel 16 fördert, während die untere Transportspur 14 einen lückenhaften Transport von Artikeln 16 zeigt (vgl. auch Fig. 4), kann die lose Lage 22 auf dem Gruppiertisch 18 in angepasster Weise (vgl. Fig. 2f) gruppiert und zusammengestellt werden. Die Lücke bei der Förderung der Artikel 16 kann in der unteren Transportspur 14 bspw. nach dem Artikel mit der Nummer 4 auftreten, so dass der Artikel mit der Nummer 6 sowie alle weiteren folgenden Artikel fehlen, während ein nach der Lücke folgender Artikel 16 mit der Nummer 9 bezeichnet werden kann. Wie die Artikelfolge in der ersten Transportspur 12 verdeutlicht, werden die Artikelnummern umgeordnet, so dass die Nummer 6 der oberen Transportspur 12 zugeordnet und nach dem Artikel 16 mit der Nummer 5 einsortiert wird. Somit werden in der oberen Transportspur 12 nach der virtuellen Umsortierung der Artikelfolge nacheinander die Artikel 16 mit den Nummern 1, 3, 5, 6, 7 und 8 und danach ggf. die ununterbrochene Reihe 1, 2, 4, usw. befördert, sofern die Störung auf der zweiten Transportspur 14 nicht behoben ist. Auf dieser zweiten Transportspur 14 werden zunächst nacheinander die Artikel 16 mit den Nummern 2, 4 und nach längerer Lücke die Nummer 9 befördert. Der normalerweise nach der Nummer 4 folgende Artikel mit der Nummer 6 fehlt, so dass er in der oberen Transportspur 12 den normalerweise nach dem Artikel mit der Nummer 5 folgenden Artikel Nummer 7 verdrängt. Dieser wird in der dargestellten Weise um eine Position nach hinten umgeordnet und folgt dementsprechend dem Artikel mit der Nummer 6.

Die schematische Darstellung der Fig. 2f verdeutlicht die Verschiebebewegungen des Manipulators, die erforderlich sind, um aus den gemäß Fig. 2f in zwei parallelen Transportspuren 12 und 14 auf den Gruppiertisch 18 beförderten Artikel 16 eine 3x3-Anordnung der losen Lage 22 zu gewinnen, obwohl die untere Transportspur 14 die Artikel 16 in der in Fig. 2e gezeigten Weise lückenhaft fördert. Hierzu muss der in der oberen Transportspur 12 beförderte Artikel mit der Nummer 3 zunächst um den Verschiebeweg s3 zur Mitte des Lagenbildes 22 nach unten verschoben werden, wonach ein weiterer Artikel mit der Nummer 6 von der oberen Transportspur 12 um den Verschiebeweg s6 zur Mitte des Lagenbildes 22 ebenfalls nach unten verschoben werden muss. Weiterhin wird der Artikel mit der Nummer 7 wiederum von der oberen Transportspur 12 um den Verschiebeweg s7 zur Mitte hin nach unten verschoben, wonach das gewünschte Lagenbild 22 erreicht werden kann.

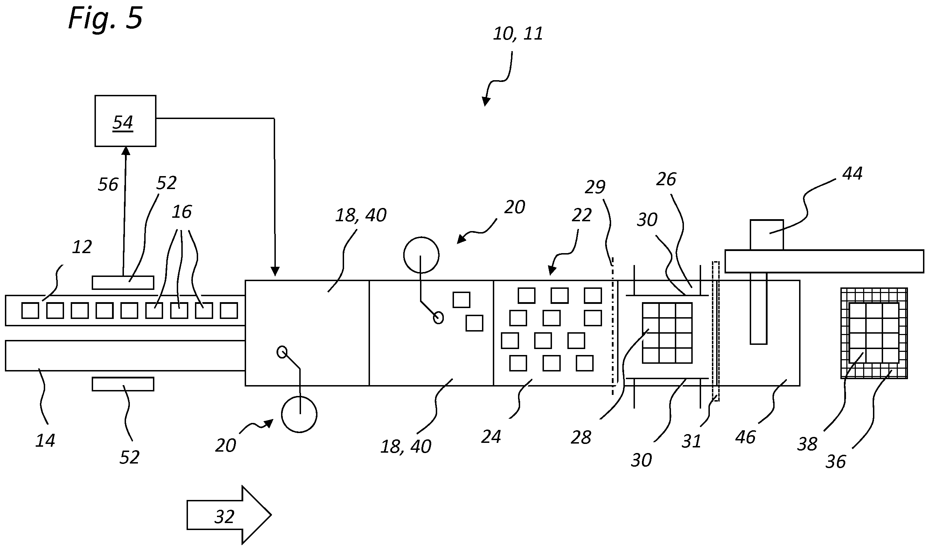

In dem in der Fig. 2g gezeigten angepassten Betriebsmodus, bei dem die obere Transportspur 12 weiterhin ununterbrochen und ohne Lücken die Artikel 16 fördert, während die untere Transportspur 14 ausfällt und keine Artikeln mehr fördert (vgl. auch Fig. 5), kann die lose Lage 22 auf dem Gruppiertisch 18 in angepasster Weise (vgl. Fig. 2h) gruppiert und zusammengestellt werden. Der Ausfall der Förderung der Artikel 16 in der unteren Transportspur 14 zwingt zu einer Umsortierung in der oberen Transportspur 12. Wie die Artikelfolge in der oberen Transportspur 12 verdeutlicht, werden die Artikelnummern umgeordnet, so dass dort eine ununterbrochene Folge der Artikel 16 mit den Nummern 1 bis 9 gefördert wird. Somit werden in der oberen Transportspur 12 nach der virtuellen Umsortierung der Artikelfolge nacheinander die Artikel 16 mit den Nummern 1, 2, 3, 4, 5, 6, 7, 8 und 9 befördert, sofern die Störung auf der zweiten Transportspur 14 nicht behoben ist.

Die schematische Darstellung der Fig. 2h verdeutlicht die Verschiebebewegungen des Manipulators, die erforderlich sind, um aus den gemäß Fig. 2g in nur einer von zwei Transportspuren 12 und 14 auf den Gruppiertisch 18 beförderten Artikel 16 eine 3x3-Anordnung der losen Lage 22 zu gewinnen. Hierzu muss der in der oberen Transportspur 12 beförderte Artikel mit der Nummer 3 zunächst um den Verschiebeweg s3 zur Mitte des Lagenbildes 22 nach unten verschoben werden, wonach ein weiterer Artikel mit der Nummer 5 von der oberen Transportspur 12 um den langen Verschiebeweg s5 ganz nach unten verschoben werden muss. Weiterhin wird der Artikel mit der Nummer 6 wiederum von der oberen Transportspur 12 um den Verschiebeweg s6 zur Mitte hin nach unten verschoben, wonach ein weiterer Artikel mit der Nummer 8 von der oberen Transportspur 12 um den langen Verschiebeweg s8 ganz nach unten verschoben werden muss. Schließlich wird der Artikel mit der Nummer 9 wiederum von der oberen Transportspur 12 um den Verschiebeweg s9 zur Mitte hin nach unten verschoben, wodurch das gewünschte Lagenbild 22 erreicht werden kann.

Anschließend werden die Artikel 16 mit den Nummern 1 bis 9 in dieser gruppierten Anordnung zur geschlossenen Lage 28 zusammengeschoben und mittels der Übergabe- und/oder Transporteinrichtung 34 ohne Veränderung des Lagenbildes zur palettierten Lage 28 überführt.

Weiterhin verdeutlichen die Figuren 3 bis 6 die Abläufe beim erfindungsgemäßen Verfahren zur Bildung von flächigen Lagen 28 aus nebeneinander stehenden Artikeln 16, Stückgütern, Gebinden 17 o. dgl. vor, bei dem die Artikel 16, Stückgüter oder Gebinde 17 auf den zwei (oder ggf. mehr) Transportspuren 12 und 14 zum Lagenbildungsplatz 19 bzw. zum zweiteiligen Gruppiertisch 18 mit den beiden hintereinander angeordneten Manipulatoren 20 befördert werden. Dort werden die Artikel 16 innerhalb einer Bewegungsebene 40 in einer Weise verschoben und/oder gedreht, dass sie eine stapel- und/oder palettierbare Lage, nämlich die zunächst relativ lose Lage 22 mit voneinander beabstandeten Artikeln 16 bilden. Die Stell-, Dreh- und/oder Verschiebebewegungen der Manipulatoren 20 können abgestuft oder auch dynamisch an die zeitlich konstanten oder im Zeitablauf variablen oder schwankenden Mengen der mittels der Transportspuren 12 und 14 jeweils zum Gruppiertisch 18 beförderten Mengen an Artikeln 16 angepasst werden. So verdeutlicht die Darstellung der Fig. 3 eine kleinere Lücke 42 zwischen aufeinander folgenden Artikeln 16 im Bereich der unteren, zweiten Transportspur 14, während der Artikelstrom in der oberen, ersten Transportspur 12 weitgehend ununterbrochen, d.h. mit geringen Abständen voneinander erfolgt. Eine dynamische Anpassung kann in diesem Zusammenhang bedeuten, dass die Manipulatoren 20 in ihren Bewegungsabläufen bereits auf kleine Lücken 42 in der Artikelfolge reagieren, bspw. wenn in der Lücke 42 nur ein einzelner Artikel 16 fehlt. Mit einer abgestuften Steuerung kann bspw. gemeint sein, dass die Manipulatoren zwischen zwei oder mehr Betriebsmodi umgeschaltet werden können, die bspw. zwischen einem ununterbrochenen Förderbetrieb und einer lückenhaften Förderung unterscheiden. Die Umschaltung in einen zweiten Betriebsmodus muss hierbei nicht bereits bei kleinen Lücken 42 erfolgen, sondern kann bspw. dann vorgesehen sein, wenn die Lücke 42 eine Größe aufweist, bei der zwei oder mehr Artikel hintereinander fehlen.

Durch eine angepasste Steuerung der Manipulatoren 20 werden auf dem Lagenbildungsplatz 19 oder dem Gruppiertisch 18 zumindest kurzzeitig mehr Artikel 16 vom oberen Bereich, der von der ersten Transportspur 12 gespeist ist, nach unten verschoben, so dass die Lücke 42 problemlos ausgeglichen werden kann, ohne dass die Fördergeschwindigkeit der Transportstrecke 11 in spürbarer Weise reduziert werden muss. Somit kann ein Nachteil der bekannten Verfahren beseitigt werden, die bei einer Stauung oder einem Ausfall einer von mehreren Transportspuren in einen Wartezustand übergehen müssen, bis der Artikeltransport wieder reibungslos läuft. Das erfindungsgemäße Verfahren ermöglicht es dagegen, auch bei Verzögerungen, Stockungen oder sogar bei einem Ausfall einer von mehreren Transportspuren 12, 14 den Sortier- und Lagenbildungsbetrieb mittels einer dynamischen Steuerung der Manipulatoren 20 und einer angepassten Geschwindigkeitssteuerung der Transportstrecke 11 und/oder der Transportspuren 12 und 14 weitgehend unverändert aufrecht zu erhalten. Bei Bedarf muss allenfalls der Materialdurchsatz aufgrund der sich dynamisch an die aktuelle Fördersituation anpassenden Manipulatoren reduziert werden.

In diesem Zusammenhang sei jedoch vorsorglich erwähnt, dass die gesamte Manipulatorsteuerung darauf beruht, nachgeförderte Artikel 16, die von den Transportspuren 12 und 14 auf den Gruppiertisch 18 übergeben werden, innerhalb der Bewegungsebene 40 in die eine oder andere Richtung zu bewegen, ohne dass bereits in ein Lagenbild eingefügte Artikel 16 nachträglich verschoben werden. Ein noch unvollständiges Lagenbild wird solange mit weiteren Artikeln 16 aufgefüllt, bis es vollständig ist, wobei die eingefügten Artikel 16 mit Hilfe der flexibel anpassbaren Manipulatorsteuerung entweder von beiden Transportspuren 12 und 14 oder vorübergehend vorwiegend von einer Transportspur oder sogar vorübergehend oder über eine längere Zeitdauer ausschließlich von einer Transportspur geliefert werden können.

In den Figuren 3 bis 6 ist die in Fig. 1 allgemein als Übergabe- und/oder Transporteinrichtung 34 angedeutete Palettiereinrichtung 44 mit einem sog. Jalousiekopf 46 o. dgl. ausgestattet, der die zusammengeschobenen Lagen 28 übernimmt und nacheinander jeweils auf eine zuvor übergebene Lage 38 mit Artikeln 16, Stückgütern und/oder Gebinden stapelt, bis eine zuvor definierte Höhe der auf der Palette 36 aufeinander gestapelten Artikel 16 erreicht ist. Zwischen der Übergabe- und/oder Transporteinrichtung 34 bzw. dem Jalousiekopf 46 und dem Lagenbildetisch 26 kann ggf. eine Überschubeinrichtung 31, bspw. ein klappbares Überschubblech o. dgl. angeordnet sein, die/das die Übergabe der Lage 28 in den Jalousiekopf 46 erleichtert.

Die schematische Darstellung der Fig. 4 zeigt einen weiteren Betriebsmodus, bei dem in der zweiten Transportspur 14 mehrere Unterbrechungen in Gestalt von unregelmäßigen Lücken 42, 48 und 50 auftreten. Die flexible und dynamische Steuerung der Manipulatoren 20 lässt es nun zu, die Sortiergeschwindigkeit je nach Fördersituation auf einem oder mehreren der die Artikel 16 zum Gruppiertisch 18 fördernden Transportspuren 12 bzw. 14 stufenlos anzupassen und dabei die Fördergeschwindigkeit insgesamt zu reduzieren, je nach den aktuell gegebenen Erfordernissen oder Möglichkeiten des Durchsatzes.

Selbst ein in Fig. 5 angedeuteter völliger Ausfall einer Transportspur 14, bspw. durch deren Stillstand oder durch das Fehlen von darauf beförderten Artikeln 16, bringt das Verfahren nicht zwangsläufig zum Stillstand, da die Steuerung der Manipulatoren 20 so angepasst werden kann, dass sie die zu einer Lage 22 zu verschiebenden Artikel 16 nur aus dem Bereich der unverändert fördernden ersten Transportspur 12 holen und auf der gesamten Fläche des Gruppiertisches 18 in der benötigten Weise verteilen. Das Verfahren ermöglicht auf diese Weise eine flexible Anpassung an eine lückenhafte, stockende und/oder ausfallende Zuförderung an einer Transportspur 14. Sobald dort Lücken 42, 48 und/oder 50 auftreten, werden die Artikel 16 durch die Anpassung der Manipulatorsteuerung entsprechend umsortiert, so dass im Wesentlichen auf die unverändert laufende obere Transportspur 12 zurückgegriffen wird. Diese Anpassung der Manipulatorsteuerung erfolgt dynamisch und so schnell, dass die obere Transportspur 12 weitgehend unbeeinflusst bleibt und insbesondere mit unveränderter Fördergeschwindigkeit weiter betrieben werden kann.

Vorzugsweise sieht das Verfahren veränderliche Fördergeschwindigkeiten der Transportspuren 12 und 14 vor. So kann insbesondere bei Stockungen oder einem Ausfall auf einer der Transportspuren 14 eine entsprechende Geschwindigkeitserhöhung der jeweils nicht betroffenen Spur 12 ausreichend hohe Sortier- und Lagenbildungsdurchsätze sicherstellen.

Die Manipulatoren 20 können bspw. auch als sog. Knickarmroboter ausgebildet sein, wie dies in Fig. 5 beispielhaft angedeutet ist. Als Manipulatoren 20 kommen bei allen Varianten der erfindungsgemäßen Vorrichtung grundsätzlich alle denkbaren und in der Praxis verfügbaren Handhabungseinrichtungen in Frage, wie bspw. Portalroboter, Knickarmroboter oder andere Roboter mit mehrachsiger Steuerung.

Was der besseren Übersichtlichkeit lediglich in Fig. 5 angedeutet und zur reibungslosen Durchführung des erfindungsgemäßen Verfahrens sinnvoll ist, ist eine geeignete Sensorik zur Erkennung der Belegungsgrade der beiden Transportspuren 12 und 14 und/oder der Artikelverteilung auf dem Gruppiertisch 18, um die Manipulatoren 20 effektiver steuern zu können. Diese Sensorik kann insbesondere Lichtschranken, Bilderfassungs- und Auswerteeinrichtungen wie Kameras o. dgl. umfassen. Wahlweise können darüber hinaus auch mechanische und/oder induktiv arbeitende Sensoreinrichtungen eingesetzt werden, um die aktuellen Belegungsgrade der Transportspuren 12 und 14 jederzeit erfassen und auswerten zu können. Sinnvollerweise ist jeder vorhandenen Transportspur 12 und 14 mindestens eine Sensoreinheit 52 zur Erkennung ihres Belegungsgrades zugeordnet, deren mittels einer Steuereinheit 54 ausgewertete Signale 56 zur Ansteuerung der Manipulatoren 20 und zur dynamischen Anpassung deren Bewegungssteuerung an unterschiedliche Belegungsgrade und/oder Funktionszustände der Transportspuren 12 und 14 eingesetzt werden.

Eine weitere, besondere vorteilhafte Variante des Lagenbildungsverfahrens kann es ermöglichen, Lagenbilder mit verschiedenen Sorten von Artikeln 16 jeweils in gewünschter Weise veränderlich zusammenzustellen. So kann es bspw. auch ohne Störung oder Stauung im Bereich einer der Transportspuren 12 oder 14 durchaus gewünscht sein, die von den Transportspuren 12 und 14 angelieferten unterschiedlichen Artikelsorten in jeweils unterschiedlicher und/oder dynamisch veränderlicher Zusammenstellung zu einzelnen Lagen 22 bzw. 28 zusammenzuführen. Die Manipulatorsteuerung kann dies problemlos ermöglichen. Solche unterschiedlichen Sorten können im Beispiel der Gebinde mit Getränkebehältern durch unterschiedliche Getränkesorten gebildet sein, die mittels des erfindungsgemäßen Verfahrens zu sog. Mischpaletten zusammengestellt werden können, sofern dies gewünscht ist. Das Mischungsverhältnis kann zudem permanent verändert und/oder an sich verändernde Bedürfnisse für aufeinander folgend zusammengestellte Paletten angepasst werden.

Die schematische Darstellung der Fig. 6 zeigt eine weitere Variante der Transportstrecke 10 zur Lagenbildung aus Artikeln 16, die von einer Umreifungsstation 60 kommend in zwei parallelen Transportspuren 12 und 14 zu einem Gruppiertisch 18 befördert werden. In diesem Fall durchlaufen die beiden parallelen Transportspuren 12 und 14 zumindest abschnittsweise eine dem Gruppiertisch 18 vorgeordnete Umreifungsstation 60 in der die Artikel 16 jeweils mit mehreren Umreifungsköpfen 62 - in diesem Fall insgesamt vier an der Zahl - mit gebindebildenden Umreifungen zusammengefasst werden, so dass im weiteren Transportverlauf in Förderrichtung 32 nicht mehr einzelne Artikel 16 (vgl. Figuren 1 bis 5), sondern Gebinde 17 mit jeweils mehreren Artikeln 16, die mittels Umreifungsbändern zusammengehalten sind, transportiert und palettiert werden.

Von der Umreifungsstation 60 werden die Gebinde 17 mittels paralleler Verbindungspuren 12a und 14a zum Gruppiertisch 18 befördert, von wo ab sich gegenüber dem übrigen Aufbau der Palettierstation 10 entsprechen der bereits erläuterten Varianten keine Besonderheiten ergeben. Die Verbindungsspuren 12a und 14a können eine geeignete Länge aufweisen, die für den Aufbau und die Anordnung der einzelnen Maschinenteile zweckmäßig und notwendig ist. Eine Staustrecke zwischen der Umreifungsstation 60 und dem Gruppiertisch 18 ist nicht erforderlich, da bei einer erheblichen Störung in der Umreifungstation 60 oder in vorgeordneten Anlagenteilen die gesamte Förderung und Handhabung der Palettierstation 10 angehalten werden kann. Eine Staustrecke ist insbesondere deshalb nicht erforderlich, da kein Schrumpftunnel o. dgl. vor der Palettierstation 10 vorhanden ist, der bei einem Stillstand oder einer Störung der Maschine zunächst leergefahren werden müsste. Die Umreifungsstation 60 kann deshalb in vorteilhafter Weise direkt mit der Palettierstation 10 verblockt werden, ggf. auch mit sehr kurzen oder in ihren Längen minimierten Verbindungsspuren 12a und 14a.

Auch die in Fig. 6 dargestellte Variante der Erfindung ermöglicht es, bei einer unregelmäßigen Zuführung von Gebinden 17, wie dies bereits anhand der Figuren 2 bis 5 am Beispiel von einzelnen Artikeln 16 verdeutlicht wurde, einen ausreichend hohen Durchsatz der Transportstrecke 11 in der Palettierstation 10 aufrecht zu erhalten. Auch bei einer unregelmäßigen Zuführung der Gebinde 17 auf einer von mehreren Transportspuren 12, 14 oder bei teilweisen oder vollständigen Unterbrechungen wenigstens einer der Transportspuren 12 oder 14 innerhalb oder außerhalb der Umreifungsstation 60 wird dabei die Palettierung und ein ausreichend hoher Handhabungs- und Transportdurchsatz aufrecht erhalten. Bei der in Fig. 6 gezeigten Ausführungsvariante ist somit auch die der Palettierung vorgeordnete Umreifungsstation 60 in die dynamische Regelung eingebunden, so dass bei einer Störung eines der Umreifungsköpfe 62 und/oder bei einem Ausfall eines Umreifungskopfes 62 oder mehrerer Umreifungsköpfe 62 in einer der Spuren 12 und/oder 14 die Palettierung der Gebinde 17 mit reduzierter Verarbeitungsgeschwindigkeit weiterlaufen kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Palettierstation
- 11: Transportstrecke
- 12: erste Transportspur
- 12a: erste Verbindungsspur
- 13: obere Zuführstation, erste Zuführstation
- 14: zweite Transportspur
- 14a: zweite Verbindungsspur
- 15: unter Zuführstation, zweite Zuführstation
- 16: Artikel
- 17: Gebinde, umreiftes Gebinde
- 18: Gruppiertisch
- 19: Lagenbildungsplatz
- 20: Manipulator
- 21: Freigabeposition
- 22: lose Lage
- 24: Horizontalfördereinrichtung
- 26: Lagenbildetisch
- 28: geschlossene Lage
- 29: Anschlageinrichtung, Anschlagblech
- 30: Schiebereinrichtung
- 31: Überschubeinrichtung, klappbares Überschubblech
- 32: Förderrichtung
- 34: Übergabe- und/oder Transporteinrichtung
- 36: Palette
- 38: palettierte Lage
- 40: Bewegungsebene
- 42: erste Lücke
- 44: Palettiereinrichtung
- 46: Jalousiekopf
- 48: zweite Lücke
- 50: dritte Lücke
- 52: Sensoreinheit
- 54: Steuereinheit
- 56: Signal
- 60: Umreifungsstation
- 62: Umreifungskopf
- s3: Verschiebeweg des Artikels Nummer 3
- s5: Verschiebeweg des Artikels Nummer 5
- s6: Verschiebeweg des Artikels Nummer 6
- s7: Verschiebeweg des Artikels Nummer 7
- s8: Verschiebeweg des Artikels Nummer 8
- s9: Verschiebeweg des Artikels Nummer 9

## Patentansprüche

1. Verfahren zur Bildung von palettierfähigen Lagen (22, 28) aus nebeneinander stehenden Artikeln (16), auf einem Lagenbildungsplatz (19) mit wenigsten einem programmgesteuerten Manipulator (20) zum Abholen und/oder Überführen einzelner oder mehrerer Artikel (16) an wenigstens zwei räumlich voneinander entfernten und/oder räumlich versetzten Zuführstationen (13, 15) und zum Positionieren durch Drehen und/oder Verschieben der Artikel (16) in vorgebbare Freigabepositionen (21) auf dem Lagenbildungsplatz (19), **dadurch gekennzeichnet, dass** eine Bereitstellungsfrequenz der Artikel (16) an den Zuführstationen (13, 15) variiert und in Abhängigkeit von einer momentanen Bereitstellungssituation der Artikel (16) an den wenigstens zwei Zuführstationen (13, 15) der wenigstens eine Manipulator (20) die Artikel (16) selektiv und ohne eine festgelegte Reihenfolge an den Zuführstationen (13, 15) abholt und bei flexibler Anpassung der jeweiligen Transferbahn in die Freigabeposition (21) überführt, wobei bei Überschreitung eines vorgegebenen Grenzwertes, der Lücken zwischen Artikeln (16) definiert, von einer zuvor als sinnvoll erkannten und vordefinierten Bewegungsvorschrift des wenigstens einen Manipulators (20) abgewichen und ein alternatives Bewegungsprofil gewählt wird, bei dem sich insgesamt abweichende Verschiebewege für die Artikel (16) zur Herstellung des gewünschten Lagenbildes ergeben.

2. Verfahren nach Anspruch 1, bei dem der Lagenbildungsplatz (19) durch einen Gruppiertisch (18) gebildet ist.

3. Verfahren nach Anspruch 1 oder Anspruch 2, bei dem die Verschiebung und/oder Drehung der Artikel (16)-auf dem Lagenbildungsplatz (19) oder Gruppiertisch (18) mittels zwei oder mehr hintereinander angeordneten Manipulatoren (20) erfolgt.

4. Verfahren nach einem der Ansprüche 1 bis 3, bei dem die zu einer Lage (22) überführten und/oder gruppierten Artikel (16) nach dem Lagenbildungsplatz (19) oder Gruppiertisch (18) auf einem Lagenbildetisch (26) verdichtet und/oder zusammengeschoben werden und anschließend mittels einer Übernahme- und/oder Palettiereinrichtung (34, 44) in einzelnen Lagen (28, 38) auf einer Palette (36) gestapelt werden.

5. Vorrichtung zur Bildung von palettierfähigen Lagen (22, 28) aus nebeneinander stehenden Artikeln (16) auf einem Lagenbildungsplatz (19), mit wenigstens zwei räumlich voneinander entfernten und/oder räumlich versetzten Zuführstationen (13, 15), mit wenigsten einem programmgesteuerten Manipulator (20) zum Abholen und/oder Überführen einzelner oder mehrerer Artikel (16) von den Zuführstationen (13, 15) und zum Positionieren durch Drehen und/oder Verschieben der Artikel (16) in vorgebbare Freigabepositionen (21) auf dem Lagenbildungsplatz (19), **dadurch gekennzeichnet, dass** eine Bereitstellungsfrequenz der Artikel (16) an den Zuführstationen (13,15) variiert, wobei die Programmsteuerung des Manipulators (20) dessen Bewegungen in Abhängigkeit von einer momentanen Bereitstellungssituation der Artikel (16) an den wenigstens zwei Zuführstationen (13, 15) selektiv und ohne eine festgelegte Reihenfolge steuert, wobei bei Überschreitung eines vorgegebenen Grenzwertes, der Lücken zwischen Artikeln (16) definiert, von einer zuvor als sinnvoll erkannten und vordefinierten Bewegungsvorschrift des wenigstens einen Manipulators (20) abgewichen und ein alternatives Bewegungsprofil gewählt wird, bei dem sich insgesamt abweichende Verschiebewege für die Artikel (16) zur Herstellung des gewünschten Lagenbildes ergeben.

6. Vorrichtung nach Anspruch 5, bei der den wenigstens zwei Zuführstationen (13, 15) jeweils Sensoreinrichtungen (52) zur Erkennung ihres Belegungsgrades an beförderten Artikeln (16) zugeordnet sind, die mit einer Steuereinrichtung (54) zur dynamisch an zeitlich konstante oder im Zeitablauf variable oder schwankende Mengen, insbesondere an voneinander abweichende Mengen der auf den wenigstens zwei Zuführstationen (13, 15) bereitgestellten Mengen an Artikeln (16) anpassbaren Ansteuerung des wenigstens einen Manipulators (20) gekoppelt sind.

7. Vorrichtung nach Anspruch 6, bei der dem wenigstens einen Manipulator (20) des Lagenbildungsplatzes (19) oder Gruppiertischs (18) eine Programmsteuerung zur Auswahl eines passenden oder optimierten Bewegungsmusters zur Drehung und/oder Verschiebung der Artikel (16), Stückgüter oder Gebinde (17) aus einer Vielzahl von verfügbaren Bewegungsmustern in Abhängigkeit von voneinander abweichenden Mengen oder Frequenzen an bereitgestellten Artikeln (16) zugeordnet ist.

8. Vorrichtung nach Anspruch 7, bei der dem Lagenbildungsplatz (19) oder Gruppiertisch (18) mit dem wenigstens einen Manipulator (20) ein Transportabschnitt zur Palettierung und/oder Stapelung der zuvor gebildeten Lagen mit Artikeln (16) nachgeordnet ist.

9. Vorrichtung nach einem der Ansprüche 5 bis 8, bei welcher der wenigstens eine Manipulator (20) durch einen Portalroboter und/oder durch einen Knickarmroboter o. dgl. gebildet ist.

10. Vorrichtung nach einem der Ansprüche 5 bis 9, bei der dem Lagenbildungsplatz (19) oder Gruppiertisch (18) wenigstens eine Umreifungsstation (60) mit einem oder mehreren Umreifungsköpfen (62) vorgeordnet ist, die direkt mit dem Lagenbildungsplatz (19) oder Gruppiertisch (18) geblockt oder mit diesem über zwei oder mehr Verbindungsspuren (12a, 14a) zum Transport von mittels der Umreifungsstation (60) umreiften Gebinden (17) gekoppelt ist.

11. Vorrichtung nach Anspruch 10, bei der die Programmsteuerung des wenigstens einen Manipulators (20) des Lagenbildungsplatzes (19) oder Gruppiertischs (18) mit einer Steuerungseinrichtung zur Steuerung und/oder Überwachung der Umreifungsköpfe (62) zur Anpassung und/oder Auswahl des Bewegungsmusters zur Drehung und/oder Verschubung der Artikel (16) gekoppelt ist.

## Claims

1. A method for forming palletisable layers (22, 28) from articles (16) standing next to each other, on a layer forming station (19) with at least one software-controlled manipulator (20) for collecting and/or transferring individual or a plurality of articles (16) from at least two feed stations (13, 15) that are spatially distant from each other and/or spatially displaced; and for positioning by rotating and/or displacing the articles (16) in specifiable release positions (21) on the layer forming station (19), **characterised in that** a supply frequency of the articles (16) at the feed stations (13, 15) varies; and the at least one manipulator (20) collects the articles (16) from the feed stations (13, 15) selectively and without a determined sequence, based on a present supply situation of the articles (16) at the at least two feed stations (13, 15); and transfers them into the release position (21) under flexible adaptation to the particular transfer path, wherein a movement rule of the at least one manipulator (20) is deviated from upon exceeding a specified limit value that defines the gaps between articles (16), with the movement rule having been previously identified as expedient and having been predefined; and an alternative movement profile is selected, resulting in altogether deviating displacement paths for the articles (16) for producing the desired layer pattern.

2. The method as recited in claim 1, with the layer forming station (19) being formed by a grouping table (18).

3. The method as recited in claim 1 or claim 2, with the displacement and/or rotation of the articles (16) on the layer forming station (19) or grouping table (18) being carried out by means of two or more consecutively disposed manipulators (20).

4. The method as recited in one of the claims 1 to 3 in which the articles (16), following the layer forming station (19) or grouping table (18) and having been transferred and/or grouped to a layer (22), are compacted and/or pushed together on a layer forming table (26) and subsequently stacked in individual layers (28, 38) on a pallet (36) by means of a takeover device and/or by means of a palletising device (34, 44).

5. An apparatus for forming palletisable layers (22, 28) from articles (16) standing next to each other, on a layer forming station (19) with at least two feed stations (13, 15) that are spatially distant from each other and/or spatially displaced; with at least one software-controlled manipulator (20) for collecting and/or transferring individual or a plurality of articles (16) from the feed stations (13, 15); and for positioning by rotating and/or displacing the articles (16) in specifiable release positions (21) on the layer forming station (19), **characterised in that** a supply frequency of the articles (16) at the feed stations (13, 15) varies, wherein the software control of the manipulator (20) controls its movements at the at least two feed stations (13, 15) selectively and without a determined sequence, based on a present supply situation of the articles (16); wherein a movement rule of the at least one manipulator (20) is deviated from upon exceeding a specified limit value that defines the gaps between articles (16), with the movement rule having been previously identified as expedient and having been predefined; and an alternative movement profile is selected, resulting in altogether deviating displacement paths for the articles (16) for producing the desired layer pattern.

6. The apparatus as recited in claim 5, in which sensor devices (52) for identifying the occupancy rate of the feed stations (13, 15) with conveyed articles (16) are associated in each case with the at least two feed stations (13, 15), with the sensor devices (52) being coupled to a control device (54) for the control of the at least one manipulator (20) in a manner that is dynamically adaptable to temporally constant quantities or to quantities varying or fluctuating over the course of time, in particular to quantities of articles (16) being supplied on the at least two feed stations (13, 15) with the quantities deviating from one another.

7. The apparatus as recited in claim 6, with a software control for selecting from a multitude of available movement patterns an appropriate or optimised movement pattern for the rotation and/or displacement of the articles (16), piece goods, or bundles (17) based on quantities or frequencies of supplied articles (16) that deviate from one another, said software control being associated with the at least one manipulator (20) of the layer forming station (19) or grouping table (18).

8. The apparatus as recited in claim 7, with a transport section for palletising and/or stacking the previously formed layers of articles (16), said transport section being disposed downstream from the layer forming station (19) or the grouping table (18) with the at least one manipulator (20).

9. The apparatus as recited in one of the claims 5 to 8, with the at least one manipulator (20) being formed by a gantry robot and/or by an articulated arm robot or the like.

10. The apparatus as recited in one of the claims 5 to 9, with at least one strapping station (60) with one or more strapping heads (62) being disposed upstream from the layer forming station (19) or from the grouping table (18), said strapping station (60) being directly blocked with the layer forming station (19) or with the grouping table (18) or being coupled with it by way of two or more connection tracks (12a, 14a) for the transport of bundles (17) having been strapped by means of the strapping station (60).

11. The apparatus as recited in claim 10, with the software control of the at least one manipulator (20) of the layer forming station (19) or the grouping table (18) being coupled to a control device for controlling and/or monitoring the strapping heads (62) to adapt and/or select the movement pattern for the rotation and/or displacement of the articles (16).

## Revendications

1. Procédé de formation de couches palettisables (22, 28) composées d'articles (16) placés les uns à côté des autres, sur un emplacement de formation de couches (19) comprenant au moins un manipulateur (20) commandé par programme qui est destiné à aller chercher et/ou à transférer des articles (16) individuels ou plusieurs articles sur au moins deux postes d'alimentation (13, 15) éloignés l'un de l'autre dans l'espace et/ou décalés dans l'espace et à positionner par rotation et/ou par déplacement les articles (16) dans des positions de libération (21) prédéfinissables sur ledit emplacement de formation de couches (19), **caractérisé par le fait qu'**une fréquence de mise à disposition des articles (16) sur les postes d'alimentation (13, 15) varie et que, en fonction d'une situation momentanée de mise à disposition des articles (16) sur lesdits au moins deux postes d'alimentation (13, 15), ledit au moins un manipulateur (20) va chercher les articles (16) de manière sélective et sans un ordre déterminé sur les postes d'alimentation (13, 15) et transfère ceux-ci, avec une adaptation flexible du chemin de transfert respectif, dans la position de libération (21), dans lequel, lorsqu'une valeur limite prédéterminée qui définit des lacunes entre des articles (16) est dépassée, on dévie d'une prescription de mouvement reconnue auparavant comme étant raisonnable et prédéfinie dudit au moins un manipulateur (20) et on choisit un profil de mouvement alternatif dans lequel on obtient des chemins de déplacement dans l'ensemble divergents pour les articles (16) pour réaliser l'image de couches souhaitée.

2. Procédé selon la revendication 1, dans lequel ledit emplacement de formation de couches (19) est constitué par une table de groupement (18).

3. Procédé selon la revendication 1 ou la revendication 2, dans lequel le déplacement et/ou la rotation des articles (16) sur l'emplacement de formation de couches (19) ou la table de groupement (18) se fait au moyen de deux ou plusieurs manipulateurs (20) disposés les uns derrière les autres.

4. Procédé selon l'une quelconque des revendications 1 à 3, dans lequel, en aval de l'emplacement de formation de couches (19) ou de la table de groupement (18), les articles (16) transférés de manière à former une couche (22) et/ou groupés sont serrés et/ou poussés les uns contre les autres sur une table de formation de couches (26) et sont ensuite empilés en couches individuelles (28, 38) sur une palette (36) par le biais d'un dispositif de réception et/ou de palettisation (34, 44).

5. Dispositif de formation de couches palettisables (22, 28) composées d'articles (16) placés les uns à côté des autres, sur un emplacement de formation de couches (19), comprenant au moins deux postes d'alimentation (13, 15) éloignés l'un de l'autre dans l'espace et/ou décalés dans l'espace, au moins un manipulateur (20) commandé par programme qui est destiné à aller chercher et/ou à transférer des articles (16) individuels ou plusieurs articles depuis lesdits postes d'alimentation (13, 15) et à positionner par rotation et/ou par déplacement les articles (16) dans des positions de libération (21) prédéfinissables sur ledit emplacement de formation de couches (19), **caractérisé par le fait qu'**une fréquence de mise à disposition des articles (16) sur les postes d'alimentation (13, 15) varie, dans lequel la commande par programme du manipulateur (20) commande les mouvements de celui-ci de manière sélective et sans un ordre déterminé, en fonction d'une situation momentanée de mise à disposition des articles (16) sur lesdits au moins deux postes d'alimentation (13, 15), dans lequel, lorsqu'une valeur limite prédéterminée qui définit des lacunes entre des articles (16) est dépassée, on dévie d'une prescription de mouvement reconnue auparavant comme étant raisonnable et prédéfinie dudit au moins un manipulateur (20) et on choisit un profil de mouvement alternatif dans lequel on obtient des chemins de déplacement dans l'ensemble divergents pour les articles (16) pour réaliser l'image de couches souhaitée.

6. Dispositif selon la revendication 5, dans lequel des dispositifs à capteur (52) destinés à détecter le degré d'occupation en articles (16) transportés desdits au moins deux postes d'alimentation (13, 15) sont associés respectivement à ces derniers, dispositifs à capteur qui sont couplés à un dispositif de commande (54) destiné à commander ledit au moins un manipulateur (20) d'une manière dynamiquement adaptable à des quantités constantes dans le temps ou variables ou fluctuantes dans le déroulement temporel, en particulier à des quantités déviant les unes des autres des quantités d'articles (16) mises à disposition sur lesdits au moins deux postes d'alimentation (13, 15).

7. Dispositif selon la revendication 6, dans lequel audit au moins un manipulateur (20) de l'emplacement de formation de couches (19) ou de la table de groupement (18) est associée une commande par programme destinée à choisir un modèle de mouvement adapté ou optimisé pour la rotation et/ou le déplacement des articles (16), produits de détail ou multipacks (17), dans une pluralité de modèles de mouvement disponibles, en fonction de quantités ou fréquences d'articles (16) mis à disposition, qui dévient les unes des autres.

8. Dispositif selon la revendication 7, dans lequel une section de transport pour la palettisation et/ou l'empilement des couches d'articles (16) formées auparavant est disposée en aval de l'emplacement de formation de couches (19) ou de la table de groupement (18) comprenant ledit au moins un manipulateur (20).

9. Dispositif selon l'une quelconque des revendications 5 à 8, dans lequel ledit au moins un manipulateur (20) est constitué par un robot portique et/ou par un robot à bras articulé ou similaire.

10. Dispositif selon l'une quelconque des revendications 5 à 9, dans lequel au moins un poste de cerclage (60) comprenant une ou plusieurs têtes de cerclage (62) qui est relié en bloc directement à l'emplacement de formation de couches (19) ou à la table de groupement (18) ou qui est couplé à celui-ci/celle-ci par l'intermédiaire de deux ou plusieurs voies de liaison (12a, 14a) pour le transport de multipacks (17) cerclés par l'intermédiaire du poste de cerclage (60), est disposé en amont de l'emplacement de formation de couches (19) ou de la table de groupement (18).

11. Dispositif selon la revendication 10, dans lequel la commande par programme dudit au moins un manipulateur (20) de l'emplacement de formation de couches (19) ou de la table de groupement (18) est couplée à un dispositif de commande destiné à commander et/ou à surveiller lesdites têtes de cerclage (62) pour adapter et/ou choisir le modèle de mouvement pour la rotation et/ou le déplacement des articles (16).
